# EUROPEAN PATENT SPECIFICATION

(11) **EP 4 560 383 B1**
(45) Date of publication and mention of the grant of the patent: **30.09.2026**
(21) Application number: 25169489.9
(22) Date of filing: 22.08.2019
(51) Int. Cl.: H04N 13/32, H04N 13/39, H04N 13/322, H04N 13/366, G02B 30/28, G02B 30/29, G02B 30/31

(54) **DEVICE AND METHOD FOR DISPLAYING VOXELS**
VORRICHTUNG UND VERFAHREN ZUR ANZEIGE VON VOXELN
DISPOSITIF ET PROCÉDÉ D'AFFICHAGE DE VOXELS

(30) Priority: 29.08.2018 US 201862724492 P; 11.10.2018 US 201862744525 P
(43) Date of publication of application: 28.05.2025
(62) Document number(s) of the earlier application(s) in accordance with Art. 76 EPC: 19769276.7 / 3 844 949
(73) Proprietor: InterDigital Madison Patent Holdings, SAS, 75017 Paris (FR)
(72) Inventor: MAKINEN, Jukka-Tapani, 90500 Oulu (FI); OJALA, Kai, 90540 Oulu (FI)
(74) Representative: AWA Denmark A/S

(56) References cited:
- US-A- 5 132 839
- US-A- 5 465 175
- US-A1- 2014 063 077
- US-A1- 2017 129 272
- US-B1- 6 462 871
- JASON GENG: "Three-dimensional display technologies", ADVANCES IN OPTICS AND PHOTONICS, vol. 5, no. 4, 22 November 2013 (2013-11-22), pages 456 - 535, XP055205716, DOI: 10.1364/AOP.5.000456

## Description

### BACKGROUND

Different 3D displays may be classified on the basis of their form factors into different categories. Head-mounted devices (HMD) occupy less space than goggleless solutions, which also means that they may be made with smaller components and less materials making them relatively low cost. However, as head mounted VR goggles and smart glasses are single-user devices, they do not allow shared experiences as naturally as goggleless solutions. Volumetric 3D displays take space from all three spatial directions and generally call for a lot of physical material making these systems easily heavy, expensive to manufacture and difficult to transport. Due to the heavy use of materials, the volumetric displays also tend to have small "windows" and limited field-of view (FOV). Screen-based 3D displays typically have one large but flat component, which is the screen and a system that projects the image(s) over free space from a distance. These systems may be made more compact for transportation and they also cover much larger FOVs than, e.g., volumetric displays. These systems may be complex and expensive as they call for projector subassemblies and e.g., accurate alignment between the different parts, making them best for professional use cases. Flat form-factor 3D displays may require a lot of space in two spatial directions, but as the third direction is only virtual, they are relatively easy to transport to and assemble in different environments. As the devices are flat, at least some optical components used in them are more likely to be manufactured in sheet or roll format making them relatively low cost in large volumes.

The human mind perceives and determines depths of observed objects in part by receiving signals from muscles used to orient each eye. The brain associates the relative angular orientations of the eyes with the determined depths of focus. Correct focus cues give rise to a natural blur on objects outside of an observed focal plane and a natural dynamic parallax effect. One type of 3D display capable of providing correct focus cues uses volumetric display techniques that may produce 3D images in true 3D space. Each "voxel" of a 3D image is located physically at the spatial position where it is supposed to be and reflects or emits light from that position toward the observers to form a real image in the eyes of viewers. The main problems with 3D volumetric displays are their low resolution, large physical size and expensive manufacturing costs. These issues make them too cumbersome to use outside of special cases e.g., product displays, museums, shows, etc. Another type of 3D display device capable of providing correct retinal focus cues is the holographic display. Holographic displays aim to reconstruct whole light wavefronts scattered from objects in natural settings. The main problem with this technology is a lack of suitable Spatial Light Modulator (SLM) component that could be used in the creation of the extremely detailed wavefronts.

A further type of 3D display technology capable of providing natural retinal focus cues is called the Light Field (LF) display. LF display systems are designed to create so-called light fields that represent light rays travelling in space to all directions. LF systems aim to control light emissions both in spatial and angular domains, unlike the conventional stereoscopic 3D displays that may basically only control the spatial domain with higher pixel densities. There are at least two different ways to create light fields. In a first approach, parallax is created across each individual eye of the viewer producing the correct retinal blur corresponding to the 3D location of the object being viewed. This may be done by presenting multiple views per single eye. The second approach is a multi-focal-plane approach, in which an object's image is projected to an appropriate focal plane corresponding to its 3D location. Many light field displays use one of these two approaches. The first approach is usually more suitable for a head mounted single-user device as the locations of eye pupils are much easier to determine and the eyes are closer to the display making it possible to generate the desired dense field of light rays. The second approach is better suited for displays that are located at a distance from the viewer(s) and could be used without headgear.

Vergence-accommodation conflict (VAC) is one issue with current stereoscopic 3D displays. A flat form-factor LF 3D display may address this issue by producing both the correct eye convergence and correct focus angles simultaneously. In current consumer displays, an image point lies on a surface of a display, and only one illuminated pixel visible to both eyes is needed to represent the point correctly. Both eyes are focused and converged to the same point. In the case of parallax-barrier 3D displays, the virtual image point is behind the display, and two clusters of pixels are illuminated to represent the single point correctly. In addition, the direction of the light rays from these two spatially separated pixel clusters are controlled in such a way that the emitted light is visible only to the correct eye, thus enabling the eyes to converge to the same single virtual point.

In current relatively low density multi-view imaging displays, the views change in a coarse stepwise fashion as the viewer moves in front of the device. This lowers the quality of 3D experience and may even cause a complete breakdown of 3D perception. In order to mitigate this problem (together with the VAC), some Super Multi View (SMV) techniques have been tested with as many as 512 views. The idea is to generate an extremely large number of views so as to make any transition between two viewpoints very smooth. If the light from at least two images from slightly different viewpoints enters the eye pupil simultaneously, a much more realistic visual experience follows. In this case, motion parallax effects resemble the natural conditions better as the brain unconsciously predicts the image change due to motion.

The SMV condition may be met by reducing the interval between two views at the correct viewing distance to a smaller value than the size of the eye pupil. At normal illumination conditions, the human pupil is generally estimated to be about 4 mm in diameter. If ambient light levels are high (e.g., in sunlight), the diameter may be as small as 1.5 mm and in dark conditions as large as 8 mm. The maximum angular density that may be achieved with SMV displays is limited by diffraction and there is an inverse relationship between spatial resolution (pixel size) and angular resolution. Diffraction increases the angular spread of a light beam passing through an aperture and this effect may be taken into account in the design of very high density SMV displays.

### SUMMARY

Systems and methods are described for providing a 3D display, such as a light-field display. In some embodiments, a display device includes: a light-emitting layer comprising an addressable array of light-emitting elements; a mosaic optical layer overlaying the light-emitting layer, the mosaic optical layer comprising a plurality of mosaic cells, each mosaic cell including at least a first optical tile having a first tilt direction and a second optical tile having a second tilt direction different from the first tilt direction; and a spatial light modulator operative to provide control over which optical tiles transmit light from the light-emitting layer outside the display device. In some embodiments, each mosaic cell further includes at least one translucent optical tile operative to scatter light from the light-emitting layer. The first optical tile and the second optical tile may be flat facets with different tilt directions.

In some embodiments, each mosaic cell includes at one optical tile having a first optical power and at least one optical tile having a second optical power different from the first optical power.

In some embodiments, each mosaic cell includes at least two non-contiguous optical tiles having the same optical power. In some embodiments, at least two optical tiles that have the same optical power have different tilt directions.

In current relatively low density multi-view imaging displays, the views change in a coarse stepwise fashion as the viewer moves in front of the device. This lowers the quality of 3D experience and may even cause a complete breakdown of 3D perception. In order to mitigate this problem (together with the VAC), some Super Multi View (SMV) techniques have been tested with as many as 512 views. The idea is to generate an extremely large number of views so as to make any transition between two viewpoints very smooth. If the light from at least two images from slightly different viewpoints enters the eye pupil simultaneously, a much more realistic visual experience follows. In this case, motion parallax effects resemble the natural conditions better as the brain unconsciously predicts the image change due to motion.

The SMV condition may be met by reducing the interval between two views at the correct viewing distance to a smaller value than the size of the eye pupil. At normal illumination conditions, the human pupil is generally estimated to be about 4 mm in diameter. If ambient light levels are high (e.g., in sunlight), the diameter may be as small as 1.5 mm and in dark conditions as large as 8 mm. The maximum angular density that may be achieved with SMV displays is limited by diffraction and there is an inverse relationship between spatial resolution (pixel size) and angular resolution. Diffraction increases the angular spread of a light beam passing through an aperture and this effect may be taken into account in the design of very high density SMV displays.
US5465175 A discloses an autostereoscopic 3D display which comprises a hybrid sandwich comprising a first lenticular screen, a spatial light modulator, a diffuser, and second lenticular screen. A plurality of light sources produce in turn divergent light beams which are modulated by the modulator with two interlaced views.
US2017129272 A1 discloses an optical product which can reproduce a first 3D image of at least part of a first 3D object and a second 3D image of at least part of a second 3D object. The optical product comprises a surface configured, when illuminated, to reproduce by reflected or transmitted light, the first 3D image without reproducing the second 3D image at a first angle of view, and the second 3D image without reproducing the first 3D image at a second angle of view. Each portion of first portions can correspond to a point on a surface of the first 3D object, and comprise first non-holographic features configured to produce at least part of the first 3D image.
US6462871 B1 discloses a stereoscopic image display apparatus, which allows the observer to satisfactorily observe a plurality of stereoscopic images from a plurality of positions by appropriately setting individual elements such as two lenticular lenses having refractive power in orthogonal directions, a mask pattern on which aperture portions and light-shielding portions are arranged at predetermined pitches, a display for dividing a plurality of parallax images into a large number of horizontal stripe-shaped parallax images and displaying the plurality of horizontal stripe-shaped parallax images at predetermined pitches in the vertical direction, and the like, upon observing a stereoscopic image using the lenticular lenses.
US2014063077 A1 discloses an automultiscopic display device which includes
(1) one or more spatially addressable, light attenuating layers, and (2) a controller which is configured to perform calculations to control the device. In these calculations, tensors provide sparse, memory-efficient representations of a light field. The calculations include using weighted nonnegative tensor factorization (NTF) to solve an optimization problem.
US5132839 A discloses a display video apparatus which provides a three dimensional image broadly comprises a backlighting apparatus for projecting beams of light in selected directions, a spatial light modulator for displaying images back-lit by the back-lighting apparatus, and a control system coupled to both the spatial light modulator and the backlighting apparatus. The control system causes a plurality of images of an object to be formed in succession on the spatial light modulator with each image being a view of the subject from a different angle, and each image being viewable only from particular angles. JASON GENG: "Three-dimensional display technologies", ADVANCES IN OPTICS AND PHOTONICS, vol. 5, no. 4, 22 November 2013 (2013-11-22), pages 456-535, XP055205716, DOI: 10.1364/AOP.5.000456" discloses various other implementations of 3D display devices.

### SUMMARY

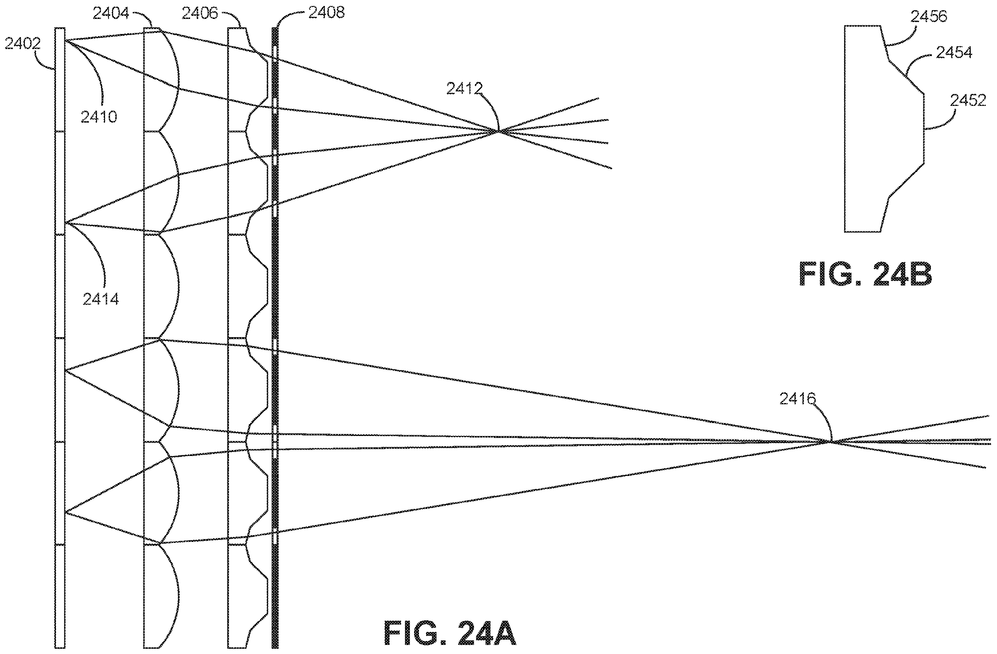

The invention defines a display device and method as set out in the appended claims and relates to the embodiments of figures 24A-24D. Other aspects or embodiments fall within the scope of the claims if provided with all the features specified in the independent claims.
Systems and methods are described for providing a 3D display, such as a light-field display. In some embodiments, a display device includes: a light-emitting layer comprising an addressable array of light-emitting elements; a mosaic optical layer overlaying the light-emitting layer, the mosaic optical layer comprising a plurality of mosaic cells, each mosaic cell including at least a first optical tile having a first tilt direction and a second optical tile having a second tilt direction different from the first tilt direction; and a spatial light modulator operative to provide control over which optical tiles transmit light from the light-emitting layer outside the display device. In some embodiments, each mosaic cell further includes at least one translucent optical tile operative to scatter light from the light-emitting layer. The first optical tile and the second optical tile may be flat facets with different tilt directions.

In some embodiments, each mosaic cell includes at one optical tile having a first optical power and at least one optical tile having a second optical power different from the first optical power.

In some embodiments, each mosaic cell includes at least two non-contiguous optical tiles having the same optical power. In some embodiments, at least two optical tiles that have the same optical power have different tilt directions.

In some embodiments, the display device is configured such that, for at least one voxel position, at least one optical tile in a first mosaic cell is configured to direct light from a first light-emitting element in a first beam toward the voxel position, and at least one optical tile in a second mosaic cell is configured to direct light from a second light-emitting element in a second beam toward the voxel position.

In some embodiments, for at least one voxel position, at least one optical tile in a first mosaic cell is configured to focus an image of a first light-emitting element onto the voxel position, and at least one optical tile in a second mosaic cell is configured to focus an image of a second light-emitting element onto the voxel position.

In some embodiments, the optical tiles in each mosaic cell are substantially square or rectangular.

In some embodiments, the mosaic cells are arranged in a two-dimensional tessellation.

In some embodiments, the mosaic optical layer is positioned between the light-emitting layer and the spatial light modulator. In other embodiments, the spatial light modulator is positioned between the light-emitting layer and the mosaic optical layer.

In some embodiments, the display device includes a collimating layer between the light-emitting layer and the mosaic optical layer.

In some embodiments, a display method comprises: emitting light from at least one selected light-emitting element in a light-emitting layer comprising an addressable array of light-emitting elements, the emitted light being emitted toward a mosaic optical layer overlaying the light-emitting layer, the mosaic optical layer comprising a plurality of mosaic cells, each mosaic cell including at least a first optical tile having a first tilt direction and a second optical tile having a second tilt direction different from the first tilt direction; and operating a spatial light modulator to permit at least two selected optical tiles to transmit light from the light-emitting layer outside the display device.

In some embodiments, the selected light-emitting element and the selected optical tiles are selected based on a position of a voxel to be displayed.

In some embodiments, for at least one voxel position, at least one optical tile in a first mosaic cell is selected to direct light from a first light-emitting element in a first beam toward the voxel position, and at least one optical tile in a second mosaic cell is configured to direct light from a second light-emitting element in a second beam toward the voxel position, such that the first beam and the second beam cross at the voxel position.

In some embodiments, a display device includes a light-emitting layer that includes a plurality of separately-controllable pixels. An optical layer overlays the light-emitting layer. The optical layer includes a plurality of mosaic cells arranged in a two-dimensional array (e.g., a tessellation). Each mosaic cell includes a plurality of optical tiles. Different tiles may differ from one another in optical power, tilt direction, translucency, or other optical property. A spatial light modulator provides control over which optical tiles transmit light from the light-emitting layer outside the display device. The light-emitting layer and the spatial light modulator are controlled in a synchronized manner to display a desired pattern of light (e.g., a light field).

Some embodiments provide the ability to create a display, such as a light field display, that is capable of presenting multiple focal planes of a 3D image while overcoming the vergence-accommodation conflict (VAC) problem. Some embodiments provide the ability to create a display, such as a light field (LF) display, with thin optics without the need for moving parts.

In some embodiments, a method is based on the use of mosaic periodic layer and a spatial light modulator (SLM). Light is emitted from separately-controllable small emitters. A mosaic layer of optical features is used for generation of multiple focusing beams and beams sections that focus to different distances. An SLM controls the aperture of each beam section and selects the focus distance used. Two or more crossing beams may be used in order to achieve the correct eye convergence and to form voxels without contradicting focus cues.

In some embodiments, an optical method and construction of an optical system is used for creating high-resolution 3D LF images with crossing beams. Light is generated on a layer containing individually addressable pixels (LEL). The light-generating layer may be, e.g., a µLED matrix or an OLED display. A periodic layer of repeating optical elements collimate and split the emitted light into several beams that focus to different distances from the structure. Several individual features in the periodic layer work together as a cluster. The periodic layer may be, e.g., a polycarbonate foil with UV-cured refractive or diffractive structures. The periodic layer has repeating small features arranged as a mosaic pattern where each feature has specific curvature, tilt angle and surface properties. In some embodiments, a Spatial Light modulator (SLM) (e.g., an LCD panel) is used in front of the periodic layer for selective blocking or passing of the beam sections that are used for 3D LF image formation.

In some embodiments, the optical system may use crossing beams to form voxels. In some embodiments, the voxels may be formed at different distances from the display surface (e.g., in front of the display, behind the display, and/or on the display surface. The different beam sections focus to different distances from the optical structure imaging the sources to different sized spots depending on the distance. As the effective focal length for each mosaic feature may be selected individually, the geometric magnification ratio may also be affected resulting in smaller source image spots and better resolution. One beam originating from a single source may be split into several sections and used in forming the voxel image to one eye, creating the correct retinal focus cues. By crossing two beams at the correct voxel distance, the full voxel is created for both eyes and the correct eye convergence angles are produced. As both retinal focus cues and convergence angles may be created separately, the system may be implemented in some embodiments to be free of VAC. Together, the source matrix and periodic layer features form a system that is capable of generating several virtual focal surfaces into the 3D space around the display.

In some embodiments, the SLM is an LCD panel. The SLM pixels may be used only with binary on-off functionality if the light emitting pixels (e.g., µLEDs) are modulated separately. However, an LCD panel may also be used for the pixel intensity modulation. Switching speed for the SLM may be sufficient to reach flicker-free images of around 60 Hz with the SLM. The main 3D image generation is done with the faster pixelated light emitter module behind the aperture controlling structure, and the SLM may be used only for passing or blocking parts of the beams that need to reach the viewer eyes, making the human visual system as the determining factor for SLM update frequency.

In some embodiments, a method is provided for producing virtual pixels. In one such method, a plurality of light-emitting element blocks comprised of light sources is provided, a periodic mosaic optical element is provided, and a spatial light modulator is provided. The illumination of the light emitting elements and the transparency of portions of the spatial light modulator are controlled in a time-synchronized manner to produce light beams of various size, intensity, and angle to replicate the properties of a light field.

### BRIEF DESCRIPTION OF THE DRAWINGS

FIG. 1A is a system diagram illustrating an example communications system according to some embodiments.
FIG. 1B is a system diagram illustrating an example wireless transmit/receive unit (WTRU) that may be used within the communications system illustrated in FIG. 1A according to some embodiments.
FIG. 1C is a system diagram of an example system illustrating an example radio access network (RAN) and an example core network (CN) that may be used within the communications system illustrated in FIG. 1A according to some embodiments.
FIGs. 2A-2C depict schematic perspective views illustrating example levels of occlusion of light fields directed towards a pupil.
FIG. 3 is a schematic plan view illustrating example light emission angles directed towards respective viewers according to some embodiments.
FIG. 4A depicts a schematic plan view illustrating a pair of eyes and the focus angle (FA) and convergence angle (CA) produced by a display for a voxel formed at a display surface according to some embodiments.
FIG. 4B depicts a schematic plan view illustrating a pair of eyes and the FA and CA produced by a display for a voxel formed behind a display surface according to some embodiments.
FIG. 4C depicts a schematic plan view illustrating a pair of eyes and the FA and CA produced by a display for a voxel formed at an infinite distance behind the display surface according to some embodiments.
FIG. 4D depicts a schematic plan view illustrating a pair of eyes and the FA and CA produced by a display for a voxel formed in front of a display surface according to some embodiments.
FIG. 5 depicts schematic views illustrating an example of increasing beam divergence caused by geometric factors.
FIG. 6 depicts schematic views illustrating an example of increasing beam divergence caused by diffraction.
FIG. 7 depicts schematic views illustrating three example lenses having various magnification ratios.
FIGs. 8A-8D are schematic views illustrating example geometric and diffraction effects for one or two extended sources imaged to a fixed distance with a fixed magnification.
FIG. 9 is a schematic plan view illustrating an exemplary viewing geometry available with a 3D display structure according to some embodiments.
FIGs. 10-11 are schematic plan views illustrating exemplary viewing geometry scenarios of 3D displays according to some embodiments.
FIG. 12A is a schematic front view illustrating a periodic feature of a portion of a 3D display according to some embodiments.
FIG. 12B is a schematic side or top view illustrating a periodic feature of a portion of a 3D display according to some embodiments.
FIG. 13 is a schematic side or top view illustrating a 3D display according to some embodiments.
FIG. 14 is a schematic front view illustrating an example mosaic pattern of a mosaic cell of a periodic feature according to some embodiments.
FIG. 15 is a schematic front view illustrating an example mosaic pattern of a mosaic cell of a periodic feature according to some embodiments.
FIG. 16 is a schematic front view illustrating an example array of a mosaic pattern of a periodic feature according to some embodiments.
FIG. 17 is a schematic front view illustrating an example array of a mosaic pattern of a periodic feature according to some embodiments.
FIG. 18 is a schematic front view illustrating an example spatial light modulator pixel color filter arrangement with a periodic feature according to some embodiments.
FIG. 19 is a schematic front view illustrating an example spatial light modulator pixel color filter arrangement with a periodic feature according to some embodiments.
FIG. 20 is a schematic side or top view illustrating an example configuration used for formation of voxels according to some embodiments.
FIG. 21 is a schematic perspective view illustrating an example configuration of a 3D display and a viewer according to some embodiments.
FIG. 22 is a schematic side or top view illustrating an example display's optical structure according to some embodiments.
FIG. 23A is a schematic front view illustrating an example mosaic cell used as a periodic feature according to some embodiments.
FIG. 23B is a schematic view of section C-C of the mosaic cell of FIG. 23A.
FIG. 24A is a schematic side or top view illustrating a portion of an example 3D display according to some embodiments, where the display is generating voxels in front of the display surface.
FIG. 24B is a schematic side view illustrating an example periodic feature according to some embodiments.
FIG. 24C is a schematic side or top view illustrating a portion of an example 3D display according to some embodiments, where the display is generating voxels behind the display surface.
FIG. 24D is a schematic side or top view illustrating a portion of an example 3D display according to some embodiments.
FIG. 25 is a schematic side or top view illustrating an example display structure according to some embodiments.
FIG. 26 is a schematic side view illustrating an example periodic structure of a portion of a display structure according to some embodiments.
FIG. 27A is a schematic top view illustrating an example ray tracing geometry of a display structure according to some embodiments.
FIG. 27B is a schematic top view illustrating an example ray tracing geometry of light beams emitted towards the left eye according to some embodiments.
FIG. 27C is a schematic plan view illustrating an example ray tracing geometry of light beams emitted towards the right eye according to some embodiments.
FIG. 27D is a schematic top view illustrating an example ray tracing geometry for a model of an eye according to some embodiments.

### EXAMPLE NETWORKS FOR IMPLEMENTATION OF THE EMBODIMENTS

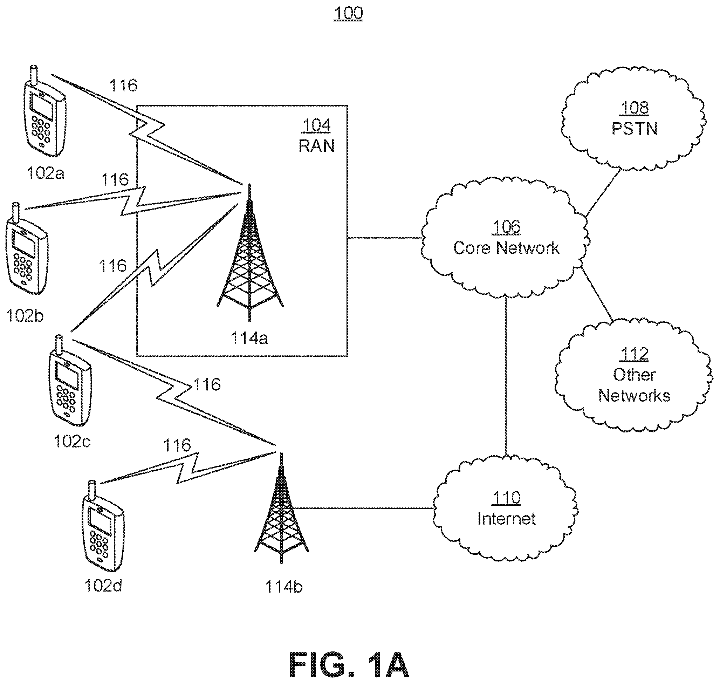

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

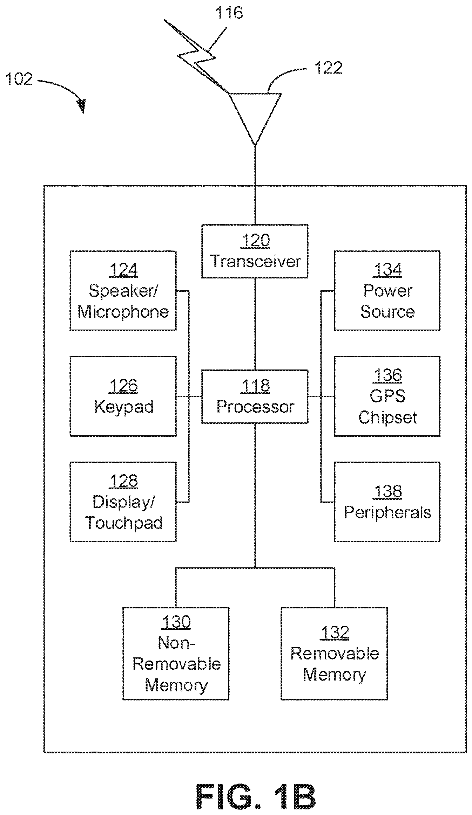

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

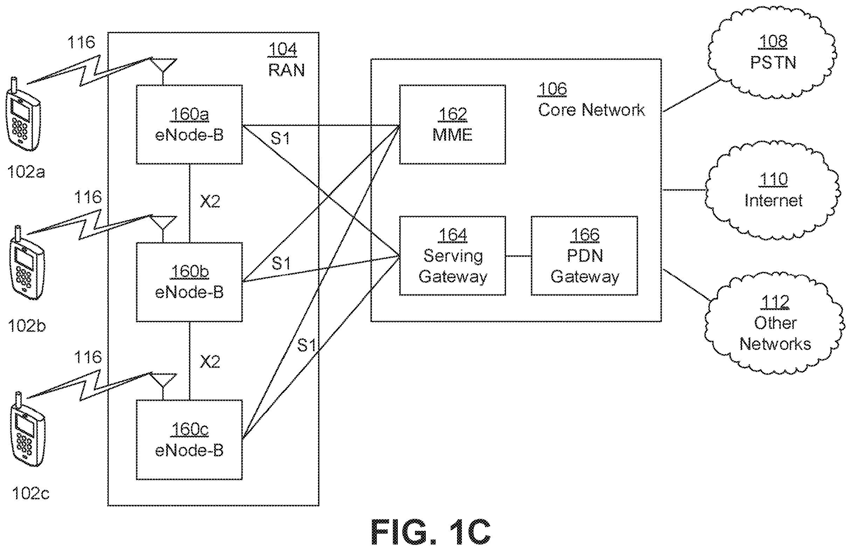

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1C as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

One or more, or all, of the functions described herein with regard to one or more of: WTRU 102a-d, Base Station 114a-b, eNode-B 160a-c, MME 162, SGW 164, PGW 166, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### DETAILED DESCRIPTION

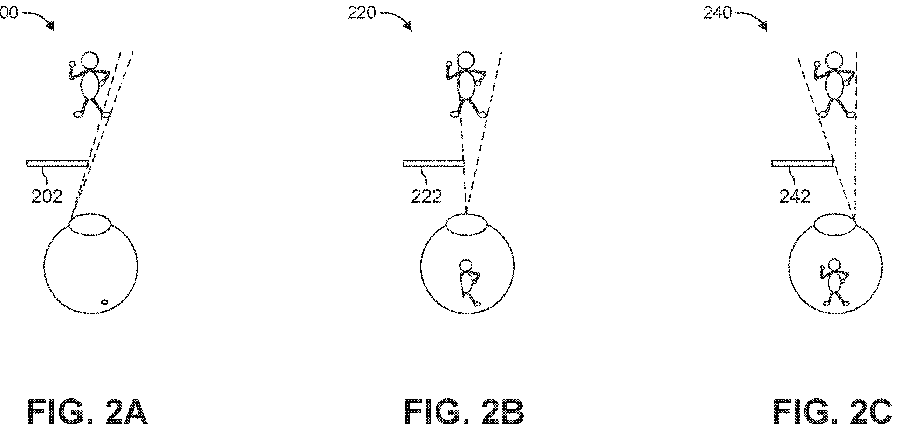

FIGs. 2A-2C are schematic views illustrating example levels of occlusion of images directed towards a pupil. FIGs. 2A-2C shows occlusions of scene caused by parallax across the pupil. In FIG. 2A, only a portion of person's body (their foot) is visible and the rest of the person is blocked by an occlusion 202. This view 200 corresponds with a left field view from a left side of the pupil. In FIG. 2B, a larger portion of the person's body is visible but a small portion of the person is still blocked by an occlusion 222. This view 220 corresponds with a central field view from a center of the pupil. In FIG. 2C, the entirety of the person's body is visible, and an occlusion 242 does not block view of the person. This view 240 corresponds with a right field view from a right side of the pupil. The resulting varied images represent views that could be presented in order to produce correct retinal blur. If the light from at least two images from slightly different viewpoints enters the eye pupil simultaneously, a more realistic visual experience follows. In this case, motion parallax effects better resemble natural conditions as the brain unconsciously predicts the image change due to motion. A super-multi-view (SMV) effect may be achieved by ensuring the interval between two views at the correct viewing distance is a smaller value than the size of the eye pupil.

At normal illumination conditions the human pupil is generally estimated to be around 4 mm in diameter. If the ambient light levels are high (e.g., in sunlight), the diameter may be as small as 1.5 mm and in dark conditions as large as 8 mm. The maximum angular density that may be achieved with SMV displays is limited by diffraction and there is an inverse relationship between spatial resolution (pixel size) and angular resolution. Diffraction increases the angular spread of a light beam passing through an aperture and this effect should be taken into account in the design of very high density SMV displays.

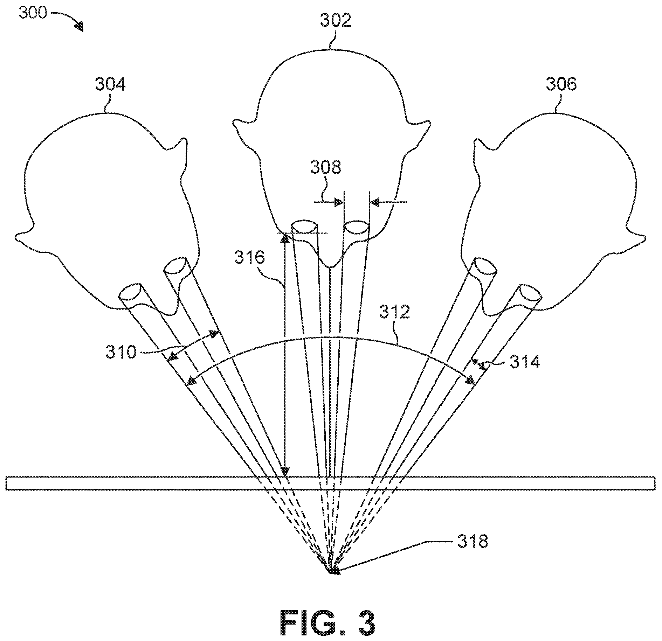

FIG. 3 is a schematic plan view illustrating example light emission angles directed towards respective viewers according to some embodiments. FIG. 3 depicts various light emission angles directed towards respective viewers. In particular, FIG. 3 shows a schematic view of the geometry 300 involved in creation of the light emission angles from a display. The display in FIG. 3 produces the desired retinal focus cues and multiple views of 3D content in a single flat form-factor panel. A single 3D display surface projects at least two different views to the two eyes of a single user in order to create a coarse 3D perception effect. The brain uses these two different eye images to determine 3D distance. Logically this is based on triangulation and interpupillary distance. To provide this effect, at least two views are projected from a light source 318 into a single-user viewing angle (SVA) 310, as shown in FIG. 3. Furthermore, in at least one embodiment, the display projects at least two different views inside a single eye pupil in order to provide the correct retinal focus cues. For optical design purposes, an "eye-box" 308 may be defined around the viewer eye pupil if determining the volume of space within which a viewable image is formed. In some embodiments of the display, at least two partially overlapping views are projected inside an Eye-Box Angle (EBA) 314 covered by the eye-box at a certain viewing distance 316. In some embodiments, the display is viewed by multiple viewers 302, 304, 306 looking at the display from different viewing angles. In such embodiments, several different views of the same 3D content are projected to respective viewers covering a whole intended multi-user viewing angle (MVA) 312.

The following paragraph provides example calculations concerning the above geometry. The values in the ensuing scenario are provided for the sake of clarity and are not meant to be limiting in any way. If the display is positioned at 1m distance from a single viewer and an eye-box width is set to 10mm, then the value for EBA would be around 0.6 degrees and at least one view of the 3D image content is generated for each angle of around 0.3 degrees. As the standard human interpupillary distance is around 64 mm, the SVA is around 4.3 degrees and around 14 different views would be desirable for a single viewer positioned at the direction of the display normal (if the whole facial area of the viewer is covered). If the display is intended to be used with multiple users, all positioned inside a moderate MVA of 90 degrees, a total of 300 different views may be used. Similar calculations for a display positioned at 30 cm distance (e.g., a mobile phone display) would result in only 90 different views for horizontal multiview angle of 90 degrees. And if the display is positioned 3 m away (e.g., a television screen) from the viewers, a total of 900 different views may be used to cover the same 90 degree multiview angle.

The calculations indicate that a multiview system is easier to create for use cases wherein the display is closer to the viewers than for those in which the users are further away. Furthermore, FIG. 3 illustrates three different angular ranges that may be considered in design of a display: one for covering the pupil of a single eye, one for covering the two eyes of a single user, and one for the multiuser case. Of these three angular ranges, the latter two may be resolved by using either several light emitting pixels under a lenticular or parallax barrier structure or by using several projectors with a common screen. These techniques are suitable for the creation of relatively large light emission angles utilized in the creation of multiple views. However, these systems lack the angular resolution required to address the eye pupil, which means that they are not necessarily capable of producing the correct retinal focus cues and are susceptible to the VAC.

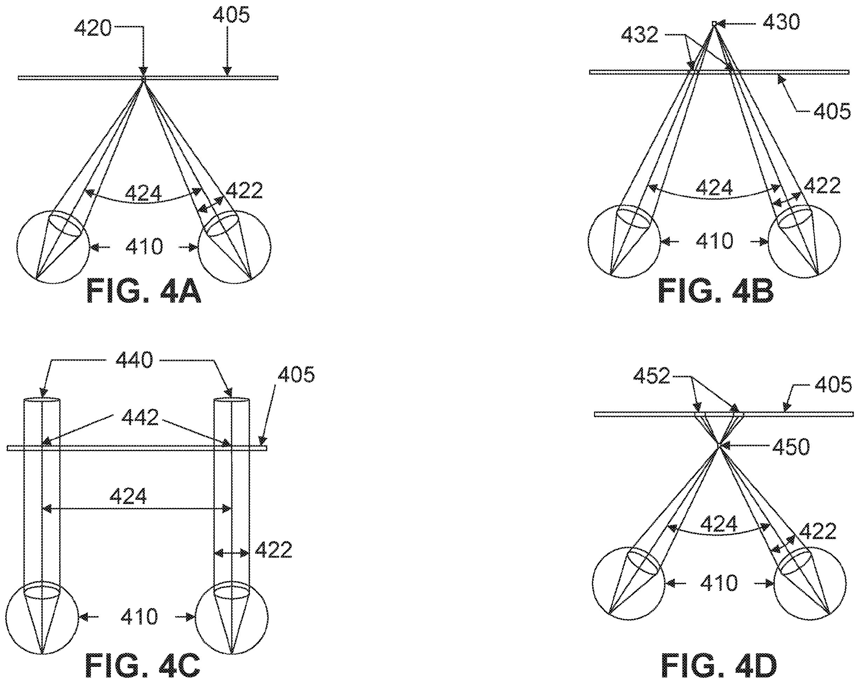

FIG. 4A depicts a schematic plan view illustrating a pair of eyes and the focus angle (FA) and convergence angle (CA) produced by a display for a voxel formed at a display surface according to some embodiments. It may be desirable for a flat form-factor high-quality 3D display to be able to produce both the eye convergence angles (CA) 424 and retinal focus angles (FA) 422 simultaneously. FIGs. 4A-D show these angles in four different 3D image content cases. In the first case illustrated in FIG. 4A, the image point 420 lies on the surface of the display 405 and only one illuminated display pixel visible to both eyes 410 is needed. Both eyes 410 are focused and converged to the same point 420.

FIG. 4B depicts a schematic plan view illustrating a pair of eyes and the FA and CA produced by an LF display for a voxel formed behind an LF display surface according to some embodiments. In the second case as illustrated in FIG. 4B, the virtual image point (voxel) 430 is behind the display 405, and two clusters of pixels 432 are illuminated. In addition, the direction of the light rays from these two display pixel clusters 432 are controlled in such a way that the emitted light is visible only to the correct eye, thus enabling the eyes 410 to converge to the same single virtual point 430.

FIG. 4C depicts a schematic plan view illustrating a pair of eyes and the FA and CA produced by a display for a voxel formed at an infinite distance behind the display surface according to some embodiments. In the third case as illustrated in FIG. 4C, the virtual image 440 is at infinity behind the screen 405 and only parallel light rays are emitted from the display surface from two pixel clusters 442.

FIG. 4D depicts a schematic plan view illustrating a pair of eyes and the FA and CA produced by a display for a voxel formed in front of an LF display surface according to some embodiments. In the last case as illustrated in FIG. 4D, the image point or voxel 450 is in front of the display 405, two pixels clusters 452 are be activated, and the emitted beams crossed at the same point 450 where they focus. In the last three presented generalized cases (FIGs. 4B, 4C, and 4D), both spatial and angular control of emitted light is used by the LF display device in order to create both the convergence and focus angles for natural eye responses to the 3D image content.

A flat-panel-type multiview display may be based on spatial multiplexing alone. A row or matrix of light emitting pixels (LF sub-pixels) may be located behind a lenticular lens sheet or microlens array and each pixel is projected to a unique view direction or to a limited set of view directions in front of the display structure. The more pixels there are on the light emitting layer behind each light beam collimating feature, the more views may be generated. This leads to a direct trade-off situation between number of unique views generated and spatial resolution. If smaller LF pixel size is desired from the 3D display, the size of individual sub-pixels may be reduced; or alternatively, a smaller number of viewing directions may be generated. Sub-pixel sizes are limited to relatively large areas due to lack of suitable components. A high quality LF display should have both high spatial and angular resolutions. High angular resolution is desirable in fulfilling the SMV condition. The balance of this detailed description focuses on a system and method for improving the spatial resolution of a flat form-factor LF display device.

In order to create good resolution 3D LF images at different focal planes with crossing beams, each beam is preferably well collimated with a narrow diameter. Furthermore, ideally the beam waist should be positioned at the same spot where the beams are crossing in order to avoid contradicting focus cues for the eye. If the beam diameter is large, the voxel formed in the beam crossing is imaged to the eye retina as a large spot. A large divergence value means that (for an intermediate image between the display and viewer) the beam is becoming wider as the distance between voxel and eye is getting smaller and the virtual focal plane spatial resolution becomes worse at the same time when the eye resolution is getting better due to the close distance. Voxels positioned behind the display surface are formed with virtual extensions of the emitted beams, and they may be allowed to be bigger as eye resolution is getting lower with the longer distance. In order to have high resolution both in front of and behind the display surface, the separate beams should have adjustable focus. Without it, the beams have a single fixed focus that sets the smallest achievable voxel size. However, as the eye resolution is lower at larger distances, the beam virtual extensions may be allowed to widen behind the display and beam focus may be set to the closest specified viewing distance of the 3D image. The focal surface resolutions may also be balanced throughout the volume where the image is formed by combining several neighboring beams in an attempt to make the voxel sizes uniform.

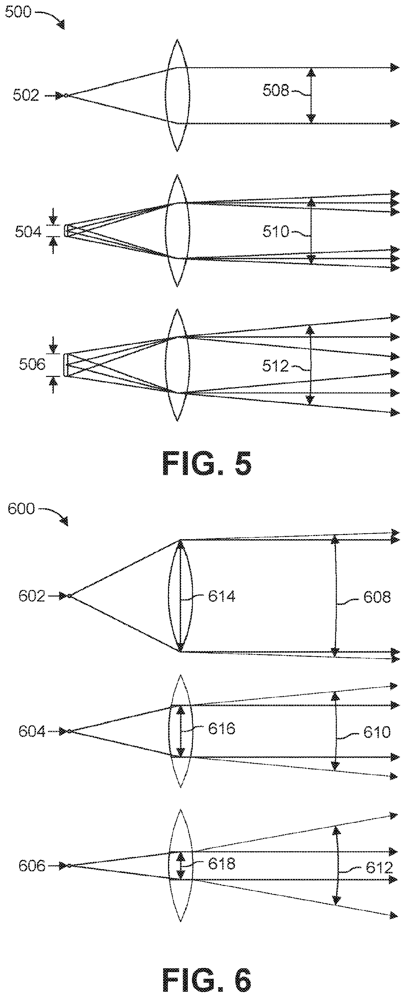

FIG. 5 depicts schematic views illustrating an example of increasing beam divergence caused by geometric factors. In the case of an ideal lens, the achievable light beam collimation is dependent on two geometrical factors: size of the light source and focal length of the lens. Perfect collimation without any beam divergence may only be achieved in the theoretical case in which a single color point source (PS) 502 is located exactly at focal length distance from an ideal positive lens. This case is pictured at the top of FIG. 5. Unfortunately, all real-life light sources have some surface area from which the light is emitted making them extended sources (ES) 504, 506. As each point of the source is separately imaged by the lens, the total beam ends up consisting from a group of collimated sub-beams that propagate to somewhat different directions after the lens. And as presented in FIG. 5 with a series of lens configurations 500, as the source 502, 504, 506 grows larger, the total beam divergence 508, 510, 512 increases. This geometrical factor may not be avoided with any optical means, and it is the dominating feature causing beam divergence with relatively large light sources.

Another, non-geometrical, feature causing beam divergence is diffraction. The term refers to various phenomena that occur when a wave (of light) encounters an obstacle or a slit. It may be described as the bending of light around the corners of an aperture into the region of geometrical shadow. Diffraction effects may be found from all imaging systems, and they cannot be removed even with a perfect lens design that is able to balance out all optical aberrations. In fact, a lens that is able to reach the highest optical quality is often called "diffraction limited" as most of the blurring remaining in the image comes from diffraction. The angular resolution achievable with a diffraction limited lens may be calculated from the formula sinθ = 1.22 * λ/D , where λ is the wavelength of light and D the diameter of the entrance pupil of the lens. It may be seen from the equation that the color of light and lens aperture size have an influence on the amount of diffraction.

As presented in FIG. 5, the size of an extended source has a big effect on the achievable beam divergence. The source geometry or spatial distribution is actually mapped to the angular distribution of the beam and this may be seen in the resulting "far field pattern" of the source-lens system. In practice this means that if the collimating lens is positioned at the focal distance from the source, the source is actually imaged to a relatively large distance from the lens and the size of the image may be determined from the system "magnification ratio".

FIG. 6 depicts schematic views illustrating an example of increasing beam divergence caused by diffraction according to some embodiments. FIG. 6 shows a schematic presentation 600 of point sources 602, 604, 606 of how the beam divergence 608, 610, 612 increases if the lens aperture size 614, 616, 618 is reduced. This effect may be formulated into a general principle in imaging optics design: if the design is diffraction limited, the way to improve resolution is to make the aperture larger. Diffraction is the dominating feature causing beam divergence with relatively small light sources.

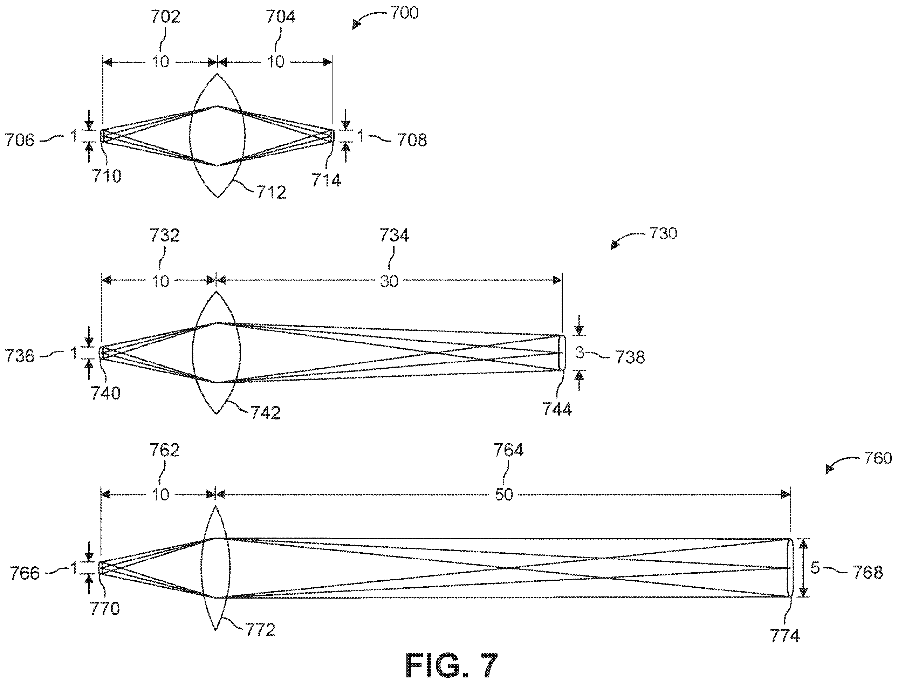

FIG. 7 illustrates three example lenses having various magnification ratios. In the case of a simple imaging lens, the magnification ratio may be calculated by dividing the distance 704, 734, 764 between lens 712, 742, 772 and image 714, 744, 774 with the distance 702, 732, 762 between source 710, 740, 770 and lens 712, 742, 772 as illustrated in FIG. 7. If the distance 702, 732, 762 between source 710, 740, 770 and lens 712, 742, 772 is fixed, different image distances 704, 734, 764 may be achieved by changing the optical power of the lens 704, 734, 764 with the lens curvature. But if the image distance 704, 734, 764 becomes larger and larger in comparison to the lens focal length 702, 732, 762, the required changes in lens optical power become smaller and smaller, approaching the situation where the lens is effectively collimating the emitted light into a beam that has the spatial distribution of the source mapped into the angular distribution and source image is formed without focusing. In the set of lens configurations 700, 730, 760, as the source 706, 736, 766 grows larger, the projected image height 708, 738, 768 increases.

In flat form factor goggleless 3D displays, the 3D pixel projection lenses may have very small focal lengths in order to achieve the flat structure, and the beams from a single 3D pixel may be projected to a relatively large viewing distance. This means that the sources are effectively imaged with high magnification if the beams of light propagate to the viewer. For example, if the source size is 50 µm x 50 µm, projection lens focal length is 1 mm and viewing distance is 1 m, the resulting magnification ratio is 1000:1 and the source geometric image will 50 mm x 50 mm in size. This means that the single light emitter may be seen only with one eye inside this 50 mm diameter eyebox. If the source has a diameter of 100 µm, the resulting image would be 100 mm wide and the same pixel could be visible to both eyes simultaneously as the average distance between eye pupils is only 64 mm. In the latter case the stereoscopic 3D image would not be formed as both eyes would see the same images. The example calculation shows how the geometrical parameters like light source size, lens focal length and viewing distance are tied to each other.

As the beams of light are projected from the 3D display pixels, divergence causes the beams to expand. This applies not only to the actual beam emitted from the display towards the viewer but also to the virtual beam that appears to be emitted behind the display, converging to the single virtual focal point close to the display surface. In the case of a multiview display this is a good thing as the divergence expands the size of the eyebox and one only has to take care that the beam size at the viewing distance does not exceed the distance between the two eyes as that would break the stereoscopic effect. However, if it is desired to create a voxel to a virtual focal plane with two or more crossing beams anywhere outside the display surface, the spatial resolution achievable with the beams will get worse as the divergence increases. It may also be noted that if the beam size at the viewing distance is larger than the size of the eye pupil, the pupil will become the limiting aperture of the whole optical system.

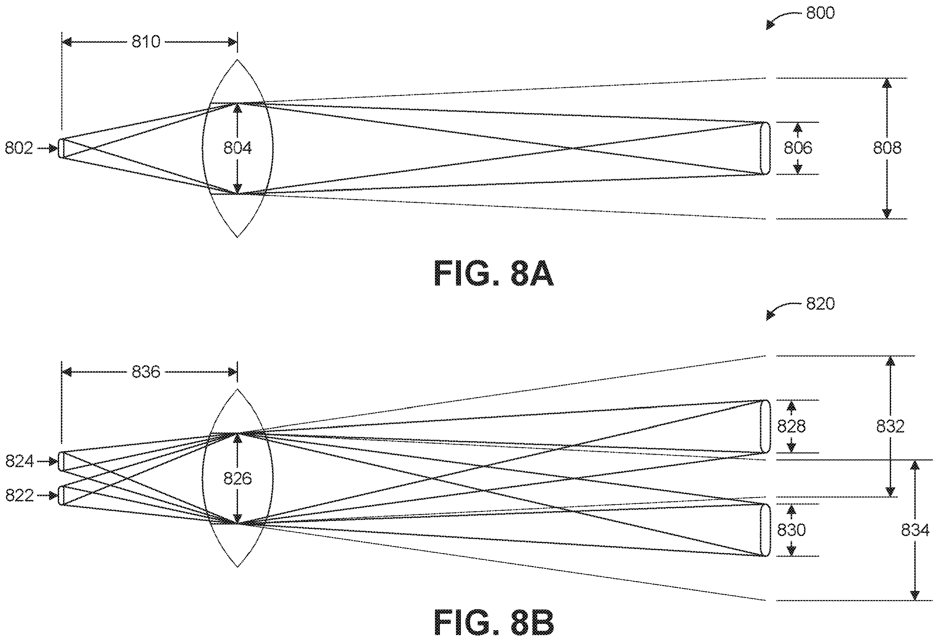

FIGs. 8A-8D are schematic views illustrating example geometric and diffraction effects for one or two extended sources imaged to a fixed distance with a fixed magnification. Both geometric and diffraction effects work in unison in all optical systems and they are balanced in the display 3D pixel design in order to achieve an optimal solution for voxel resolution. This is emphasized with very small light sources as the optical system measurements become closer to the wavelength of light and diffraction effects start to dominate the performance. The schematic presentations of FIGs. 8A-D illustrate how the geometric and diffraction effects work together in cases 800, 820, 850, 870 such that one extended source 802, 852 or two extended sources 822, 824, 872, 874 are imaged to a fixed distance with a fixed magnification. FIG. 8A shows a case 800 where the lens aperture size 804 is relatively small, and the extended source 802 is located a focal distance 810 away from the lens. In FIG. 8A, the geometric image (GI) 806 is surrounded by blur that comes from diffraction making the diffracted image (DI) 808 much larger.

FIG. 8B shows a case 820 where two extended sources 822, 824 are placed side-by-side at a focal distance 836 from the lens and imaged with a lens that has the same small aperture size 826. Even though the Gls 828, 830 of both sources 822, 824 are clearly separated, the two source images cannot be resolved because the diffracted images 832, 834 overlap. In practice, this situation would mean that reduction of light source size would not improve the achievable voxel resolution as the resulting source image size would the same with two separate light sources as with one larger source that covers the area of both separate emitters. In order to resolve the two source images as separate pixels/voxels, the aperture size of the imaging lens should be increased.

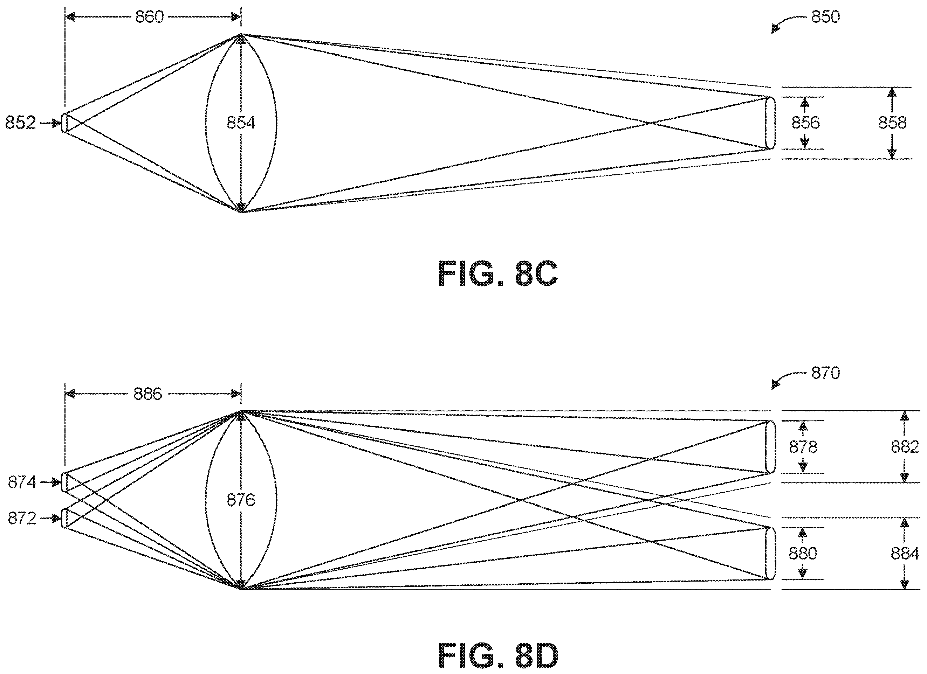

FIG. 8C shows a case 850 where the lens has the same focal length 860 but a larger aperture 854 is used to image the extended source 852. Now the diffraction is reduced and the DI 858 is only slightly larger than the GI 856, which has remained the same as magnification is fixed.

FIG. 8D shows a case 870 where two extended sources 872, 874 are located a focal distance 886 away from a lens with an aperture size 876 equal to the size of the lens. The Dls 882, 884 are only slightly larger than the Gls 878, 880. The two spots are now resolved because the Dls 882, 884 are no longer overlapping, enabling use of two different sources 872, 874 and improving the spatial resolution of the voxel grid.

### Optical Design Features of Example Displays

Some embodiments provide the ability to create a display. In some embodiments, the display may be used as a light field display that is capable of presenting multiple focal planes of a 3D image while addressing the vergence-accommodation conflict (VAC) problem.

In some embodiments, the display projects emitter images towards both eyes of the viewer without light scattering media between the 3D display and the viewer. In order to create a stereoscopic image by creating a voxel located outside the display surface, it may be useful for a display to be configured so that an emitter inside the display associated with that voxel is not visible to both eyes simultaneously. Accordingly, it may be useful for the field-of-view (FOV) of an emitted beam bundle to cover both eyes. It may also be useful for the single beams to have FOVs that make them narrower than the distance between two eye pupils (around 64 mm on average) at the viewing distance. The FOV of one display section as well as the FOVs of the single emitters may be affected by the widths of the emitter row/emitter and magnification of the imaging optics. It may be noted that a voxel created with a focusing beam may be visible to the eye only if the beam continues its propagation after the focal point and enters the eye pupil at the designated viewing distance. It may be especially useful for the FOV of a voxel to cover both eyes simultaneously. If a voxel were visible to single eye only, the stereoscopic effect may not be formed and 3D image may not be seen. Because a single display emitter may be visible to only one eye at a time, it may be useful to increase the voxel FOV by directing multiple crossing beams from more than one display emitter to the same voxel within the human persistence-of-vision (POV) time frame. In some embodiments, the total voxel FOV is the sum of individual emitter beam FOVs.

In order to make local beam bundle FOVs overlap at their associated specified viewing distances, some embodiments may include a curved display with a certain radius. In some embodiments, the projected beam directions may be turned towards a specific point, e.g., using a flat Fresnel lens sheet. If the FOVs were not configured to overlap, some parts of the 3D image may not be formed. Due to the practical size limits of a display device and practical limits for possible focal distances, an image zone may be formed in front of and/or behind the display device corresponding to the special region wherein the 3D image is visible.

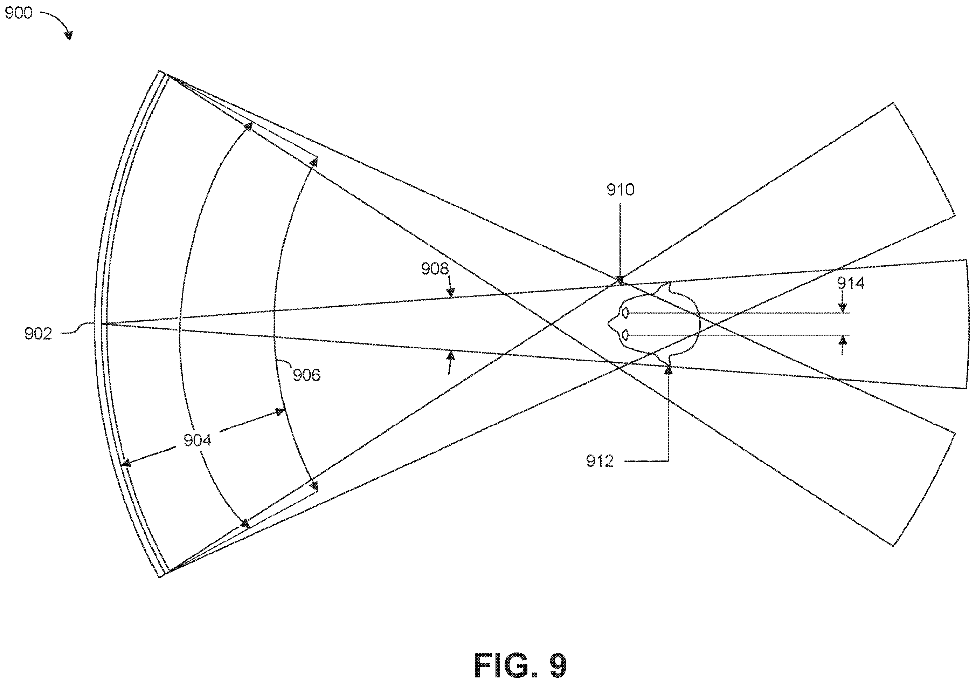

FIG. 9 is a schematic plan view illustrating an exemplary viewing geometry available with a 3D display structure according to some embodiments. FIG. 9 shows a schematic presentation 900 of an example viewing geometry that may be achieved with a 3D display structure 902 based on the use of crossing beams. In front of the curved display 902, the limit of a 3D image zone 904 may be considered to be the furthest focal distance from the display with reasonable spatial resolution. The image zone 904 may also be considered to be limited by the FOV 906 of the whole display. In order to get the maximum resolution at the minimum image distance, the display optical features may be designed to focus the source images to the furthest edge of this zone. In some embodiments, there may also be another image zone behind the display formed by the virtual extensions of the emitted beams. In some embodiments, voxels behind the display 902 may have larger allowable sizes because the viewer is positioned further away and because eye resolution may be lower at greater distances. In some embodiments, a maximum image distance may be selected on the basis of a minimum acceptable resolution achievable with the expanding beam virtual extensions.

FIG. 9 illustrates an example viewing geometry of a 3D light field display 902, in accordance with some embodiments. In particular, the display surface depicted in FIG. 9 is curved with a radius which is the same as the designated viewing distance. In the example, the overlapping beam bundle FOVs 910 form a viewing zone around the facial area of the viewer 912. The size of this viewing zone may affect the amount of movement allowed for the viewer head. It may be useful for both eye pupils (and the distance 914 between the pupils) to be positioned inside the zone simultaneously in order to make the stereoscopic image possible. The size of the viewing zone may be selected by altering the beam bundle FOVs 908. The particular design may be selected on the basis of the particular use case.

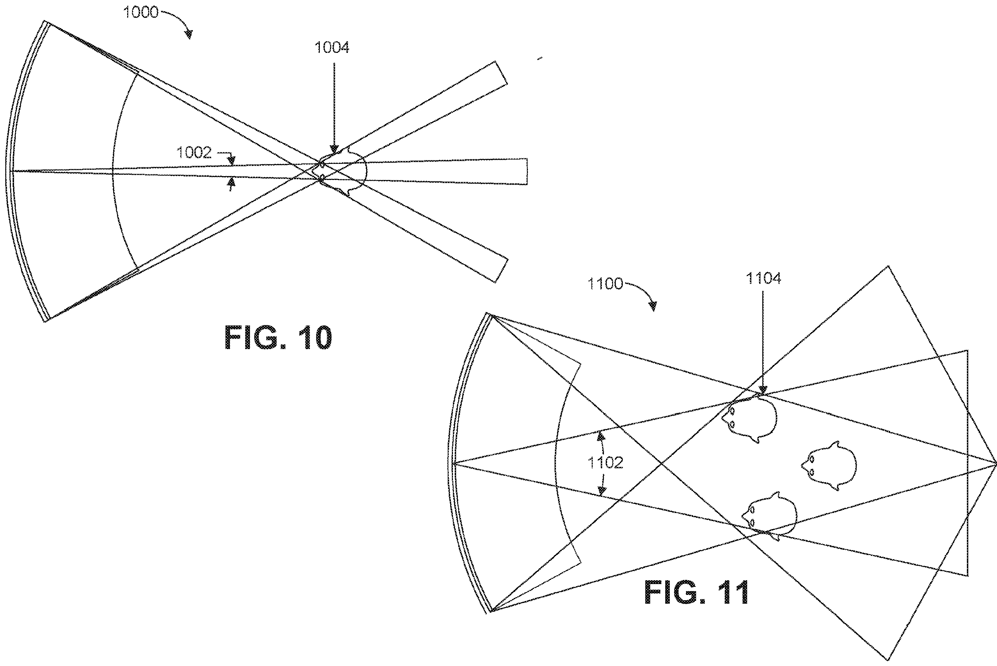

FIGs. 10-11 are schematic plan views illustrating exemplary viewing geometry scenarios of 3D displays according to some embodiments. FIGs. 10-11 show schematic representations of two different example viewing geometry cases 1000, 1100.

A first scenario 1000, as shown in FIG. 10, depicts a scenario of a single viewer 1004 in front of a display and the corresponding viewing geometry in which a small viewing zone covers both eyes' pupils. This may be achieved using narrow beam bundle FOVs 1002. A minimum functional width of the zone may be affected by the eye pupil distance. For example, an average pupil distance may be around 64 mm. A small width may also imply a small tolerance for viewing distance changes as the narrow FOVs 1002 tend to quickly separate from each other at increasing distances both in front of and behind the optimal viewing location.

A second scenario 1100, as shown in FIG. 11, depicts a viewing geometry with wider beam bundle FOVs 1102. This viewing geometry may make it possible to have multiple viewers 1104 inside the viewing zone and at different viewing distances. In this example, the positional tolerances may be large.

The viewing zone may be increased by increasing the FOV of each display beam bundle. This may be done, for example, by increasing the width of the light emitter row or by changing the focal length of the beam collimating optics. Smaller focal lengths may result in larger voxels, so it may be useful to increase the focal length to achieve better resolution. A trade-off may be found between the optical design parameters and the design needs. Accordingly, different use cases may balance between these factors differently.

### Example µLED Light Sources

Some embodiments make use of µLEDs. These are LED chips that are manufactured with the same basic techniques and from the same materials as standard LED chips. However, the µLEDs are miniaturized versions of the commonly available components and they may be made as small as 1 µm - 10 µm in size. One dense matrix that has been manufactured so far has 2 µm x 2 µm chips assembled with 3 µm pitch. When compared to OLEDs, the µLEDs are much more stable components and they may reach very high light intensities, which makes them advantageous for many applications from head mounted display systems to adaptive car headlamps (LED matrix) and TV backlights. The µLEDs may also be seen as high-potential technology for 3D displays, which call for very dense matrices of individually addressable light emitters that may be switched on and off very fast.

A bare µLED chip may emit a specific color with spectral width of around 20-30 nm. A white source may be created by coating the chip with a layer of phosphor, which converts the light emitted by blue or UV LEDs into a wider white light emission spectrum. A full-color source may also be created by placing separate red, green and blue LED chips side-by-side as the combination of these three primary colors creates the sensation of a full color pixel when the separate color emissions are combined by the human visual system. The previously mentioned very dense matrix would allow the manufacturing of self-emitting full-color pixels that have a total width below 10 µm (3 x 3 µm pitch).

Light extraction efficiency from the semiconductor chip is one of the parameters that determine electricity-to-light efficiency of LED structures. There are several methods that aim to enhance the extraction efficiency and thus allow LED-based light sources to use the available electric energy as efficiently as feasible, which is useful with mobile devices that have a limited power supply. Some methods use of a shaped plastic optical element that is integrated directly on top of a LED chip. Due to lower refractive index difference, integration of the plastic shape extracts more light from the chip material in comparison to a case where the chip is surrounded by air. The plastic shape also directs the light in a way that enhances light extraction from the plastic piece and makes the emission pattern more directional. Other methods shape the chip itself to a form that favors light emission angles that are more perpendicular towards the front facet of the semiconductor chip and makes it easier for the light to escape the high refractive index material. These structures also direct the light emitted from the chip.

### Example Optical Structure and Function

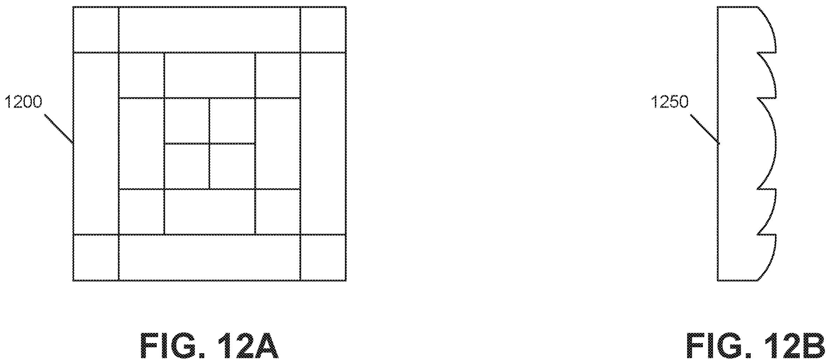

FIG. 12A is a schematic front view illustrating a periodic feature of a portion of a 3D display according to some embodiments. FIG. 12B is a schematic side or top cross-sectional view illustrating a periodic feature of a portion of a 3D display according to some embodiments. In some embodiments, an light emitting layer (LEL) of a 3D display may be, e.g., a µLED matrix, OLED display or LCD display with backlight. A periodic layer 1200 with mosaic optical features is placed in front of the LEL structure and it may be, e.g., a polycarbonate foil or sheet with refractive optical shapes manufactured by UV-curing in roll-to-roll process. For some embodiments, a periodic layer 1250 may include geometric shapes as shown from a side view in FIG. 12B that affect transmission angles.

As most light sources (e.g., µLEDs) emit light into fairly large numerical apertures (NA), several individual optical features in the layer may work together as a cluster. A cluster may collimate and focus the light from a single emitter into several beam sections that form light source images. The number of features utilized in the formation of a single light source image may depend on the source NA, the distance between the LEL and the periodic layer, and/or the design of the features of the periodic layer. Two beam sections may be used for one source image in order to provide the right focus cues for a single eye. It may be helpful to use at least two beams with at least two sections in order to provide the correct eye convergence cues. In some embodiments, the optical structures may be one-dimensional (e.g., cylindrical refractive features tilted to one direction) to provide views across one axis (e.g., providing only horizontal views). In some embodiments, the optical structures may be two-dimensional (e.g., biconic microlenses) for example to provide views across two axes (e.g., providing views in both horizontal and vertical directions).

In some embodiments, a periodic layer contains repeating mosaic cells that are formed from smaller optical sub-features constructed in a mosaic pattern. Each smaller mosaic sub-feature or tile of the mosaic cell may have different optical properties depending on the refractive index, surface shape, and/or surface property. Examples of surface shapes may include flat facets, continuous curved surfaces with different curvature in two directions, and diffusing rectangles with optically rough surfaces, among others. The tiles may populate different surface areas with different patterns on the repeating feature.

In some embodiments, the tiles of a mosaic pattern collimate and split the emitted light into different beam sections that may travel to slightly different directions depending on a tile's optical properties. The beam sections may be focused to different distances from the optical structure, and the focusing may be performed in both vertical and horizontal directions. Spots imaged further away from the display may be bigger than spots imaged to a shorter distance as discussed previously. However, as the effective focal length for each mosaic feature tile may be selected individually, the geometric magnification ratio may also be selected in order to reach smaller source image spots and better resolution. Neighboring light emitters inside one source matrix may be imaged into a matrix of spots. Together the source matrix, periodic layer mosaic features, and SLM form a system that is capable of generating several virtual focal surfaces into the 3D space around the display.

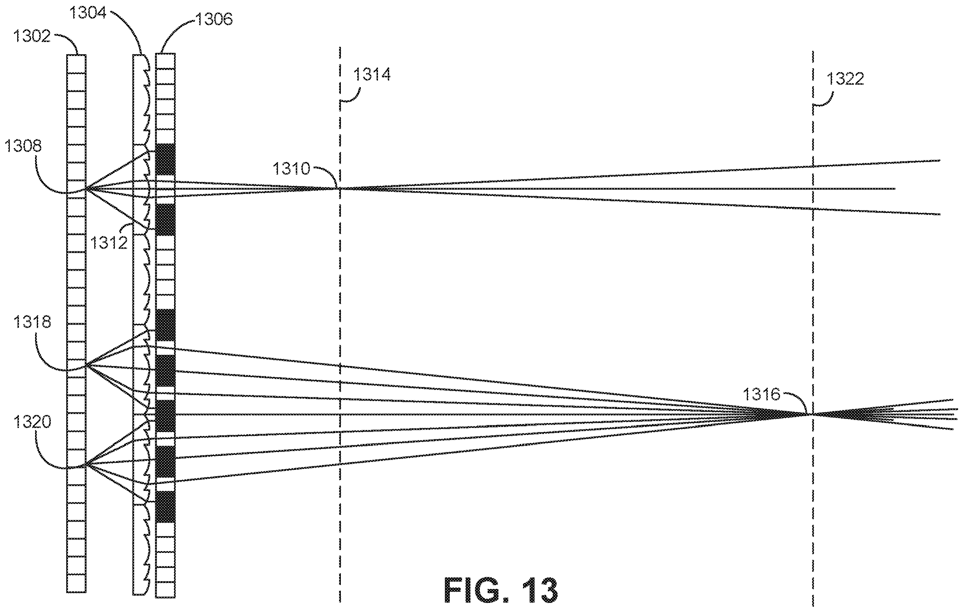

FIG. 13 is a schematic cross-sectional side or top view illustrating a portion of a 3D display according to some embodiments. Some embodiments provide an optical method and basic construction of an optical system that may be used for creating high-resolution 3D images with crossing beams. As shown in the example in FIG. 13, light is generated on a layer 1302 containing a two-dimensional array of individually addressable pixels. A layer 1304 of repeating optical elements referred to here as a periodic layer collimates and splits the emitted light into several beam sections that focus to different distances from the structure. Several individual features in the periodic layer may work together as a cluster. The repeating small features may be arranged as a mosaic pattern where each feature has specific curvature, tilt angle, and surface properties. A spatial light modulator (SLM) 1306 may be used to selectively block or pass the beam sections that are used for 3D image formation. The SLM 1306 may be positioned in front of or behind the periodic layer. The blocking and passing of beam sections may be used to form images on a number of focal surfaces which may be determined by the periodic mosaic layer properties.

In the example of FIG. 13, to generate a voxel at position 1310 in front of the display surface, light is emitted from a position 1308 (e.g. from a pixel at position 1308). The emitted light passes through the optical layer 1304, and the SLM 1306 operates to control the light that exits the display surface. (Transparent portions of the SLM are illustrated as empty boxes and opaque portions of the SLM are illustrated as blackened boxes.) In this example, the SLM 1306 only allows light from the central portions of the mosaic cell 1312 to exit the display. Those rays converge at voxel 1310. Voxel 1310 lies on an image plane 1314. Voxel 1310 may be an image of the light emitting element at position 1308. Other voxels may be displayed on image plane 1314 using analogous techniques.

To generate a voxel at position 1316, light is emitted from pixels at positions 1318 and 1320 of the light-emitting layer, and the SLM 1306 operates to permit passage only of the light focused on the voxel position 1316 while blocking other light (e.g. blocking light that would otherwise be focused on image plane 1314 or elsewhere). Voxel 1316 may include the superimposed images of the light emitting elements at positions 1318 and 1320. Voxel 1316 lies on an image plane 1322. Other voxels may be displayed on image plane 1322 using analogous techniques. As is apparent from FIG. 13, a voxel may be generated using light from a single pixel or light from more than one pixel. Similarly, a voxel may be generated using light that passes through a single mosaic cell or light that passes through more than one mosaic cell. While FIG. 13 illustrates generation of voxels in front of the display surface, further examples are given below in which voxels are generated on or behind the display surface.

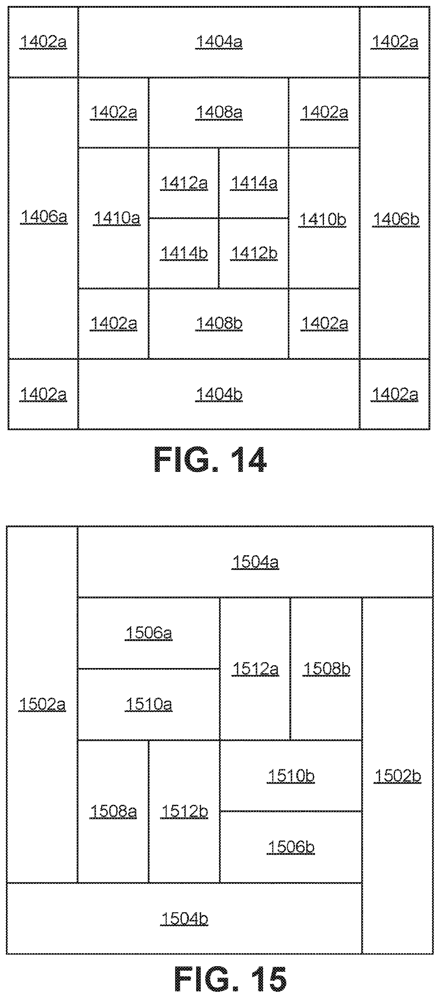

FIG. 14 is a schematic front view illustrating an arrangement of optical tiles with an example mosaic cell according to some embodiments. In this example, the optical tiles 1402a are translucent (e.g. optically rough) optical tiles that scatter light traveling through them. The optical tiles 1404a-b and 1406a-b are configured to focus light to a first focal distance. Two of these tiles, 1406a-b, are used for focusing the beam sections in the x-direction, and two of them, 1404a-b are used for focusing in the orthogonal y-direction. Similarly, four more tiles, 1408a-b and 1410a-b are used for focusing the beam sections to a second focal distance. The four tiles in the center of the mosaic cell, 1412a-b and 1414a-b, are used for focusing the beams in both directions to a third focal distance. In the arrangement presented in the first example pattern, the rectangular corners of each nested focus zone may be used for creating 2D display images with higher pixel resolution. In some embodiments, these tiles, or "2D pixels," may have rough surfaces or other translucent feature so as to scatter the light into all angles making the pixels visible from all viewing directions. In some embodiments, the 2D pixels may be used in the 3D image formation when the voxels are located at the display surface.

FIG. 15 is a schematic front view illustrating an example mosaic pattern of a mosaic cell of a periodic feature according to some embodiments. The example pattern depicted in FIG. 15, shows a similar arrangement, but without translucent 2D pixel features. Optical tiles 1502a-b and 1504a-b are operative to focus light to a first focal distance. Optical tiles 1506a-b and 1508a-b are operative to focus light to a second focal distance, and optical tiles 1510a-b and 1512a-b are operative to focus light to a third focal distance. The tiles that focus to the second and third distances have the same total area, which may help balance out light intensity falling on these two focal layers. In this case, the first focal layer is created with larger surface area tiles, which makes it possible, e.g., to emphasize some focal surface with higher light intensity or to increase the amount of light on a larger sized voxel in order to balance the irradiance. These larger areas may also be used as 2D display pixels with higher intensity when the 3D image is not formed.

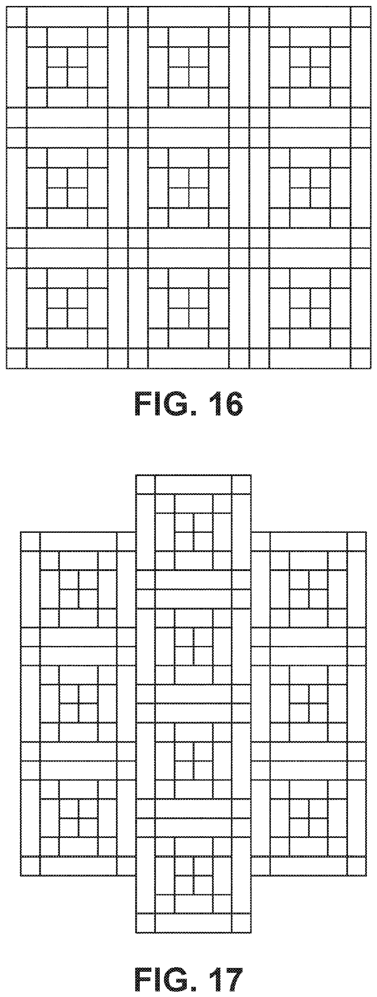

FIG. 16 is a schematic front view illustrating an example two-dimensional array of mosaic cells in an optical layer according to some embodiments. Mosaic cells may be arranged into different array patterns on the periodic layer. FIGs. 16-17 depict two examples of array patterns, in accordance with some embodiments. In a first example, shown in FIG. 16, the mosaic cells form a rectangular matrix where the rows and columns form straight horizontal and vertical lines. This pattern may allow easier rendering calculations as the generated voxels are also arranged into a rectangular matrix.

FIG. 17 is a schematic front view illustrating an example array of a mosaic pattern of a periodic feature according to some embodiments. A second example array pattern illustrated in FIG. 17 depicts an alternative arrangement wherein there is an offset (e.g. vertical or horizontal) between neighboring columns. This pattern may be useful for increasing the effective resolution, e.g., in the case where only horizontal crossing beams are generated.

In some embodiments, the periodic layer may be manufactured, e.g., as a polycarbonate sheet with optical shapes made from UV-curable material in a roll-to-roll process. In some embodiments, the periodic layer may include a foil with embossed diffractive structures. In some embodiments, the periodic layer may include a sheet with graded index lens features or a holographic grating manufactured by exposing photoresist material to a laser-generated interference pattern. Individual sub-feature sizes and pattern fill-factors may have an effect on the achievable resolution and, e.g., on the amount of image contrast by reducing stray light introduced to the system. This means that very high quality optics manufacturing methods may be helpful for producing the master, which is then replicated. As the single feature may be very small, the first master with the appropriate shapes may also be very small in size, which may help lower manufacturing costs. Because this same pattern is repeated over the whole display surface, less precision may be needed in order to accurately align the light emitting layer with the periodic layer in the horizontal or vertical directions. The depth direction may be well aligned as it may affect the location of focal surfaces outside the display surface.

In some embodiments, the SLM may be, e.g., an LCD panel used for selectively blocking or passing parts of the projected beams. As the optical structure is used for creation of the multiple beam sections, there may be no clearly defined display pixel structures and the LCD is used as an adaptive mask in front of the light beam generating part of the system. In order to implement an adequately small pixel size, it may be useful for the pixel size to be in the same size range or smaller than the periodic feature tile size. If the pixels are much smaller than the feature tiles, there may be less need for accurate alignment of periodic layer to the SLM, but if the pixels are the same size, good alignment between these two layers may be more beneficial. Pixels may be arranged in a regular rectangular pattern or they may be custom made to the periodic mosaic layer optical features. The pixels may also contain color filters for color generation if the light emitted from the LEL is white as in the case of, e.g., phosphor overcoated blue LED matrix.

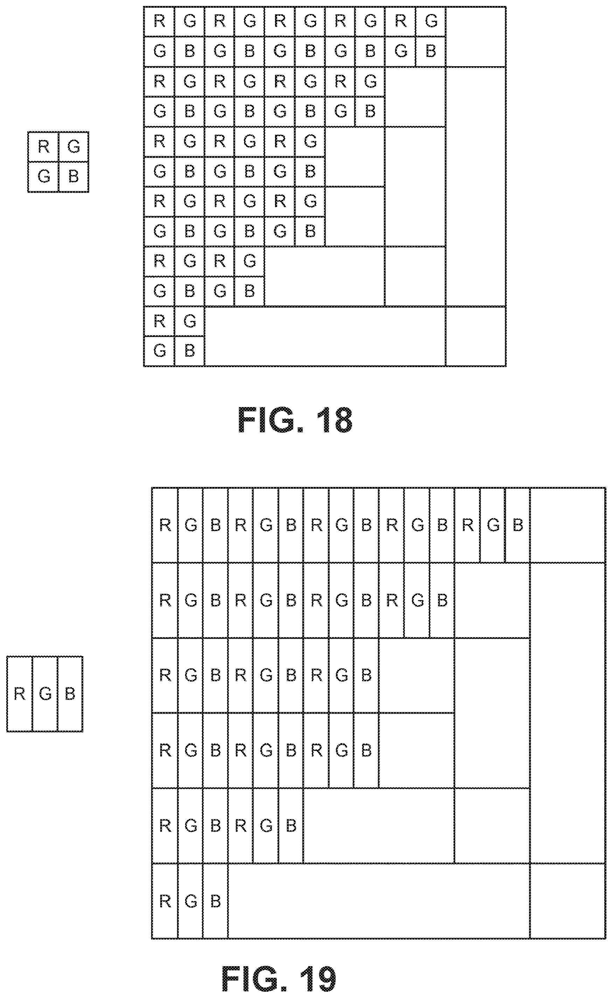

FIG. 18 is a schematic cutaway front view illustrating an example spatial light modulator pixel color filter arrangement with a periodic feature according to some embodiments. Two example color filter arrangements are shown in FIGs. 18 and 19. If the LEL contains colored pixels (e.g., separate red (R), green (G), and blue (B) µLEDs), the SLM may be used for simpler intensity adjustment of the beams.

In some embodiments, a display system uses a combination of spatial and temporal multiplexing. In this case, it is useful to have an SLM component fast enough to achieve an adequate refresh rate for a flicker-free image. The SLM and light emitting layer may work in unison when the image is rendered. It may be particularly useful for the LEL and SLM to be synchronized. The SLM may be used as an adaptive mask that has an aperture pattern that is, e.g., swept across the display surface when a single source or a group of sources are activated. Several of these patterns may be used simultaneously by masking source clusters simultaneously at different parts of the LEL. In some embodiments, it may be helpful to implement light emitting components (e.g., µLEDs) with faster refresh rates than the SLM. In this way, the sources may be activated several times within a refresh period of the SLM (e.g., an SLM having a 60 Hz refresh rate). Eye tracking may also be used for lowering the requirements for the update speed by rendering images to only some specified eyebox regions rather than rendering images to the display's entire FOV.

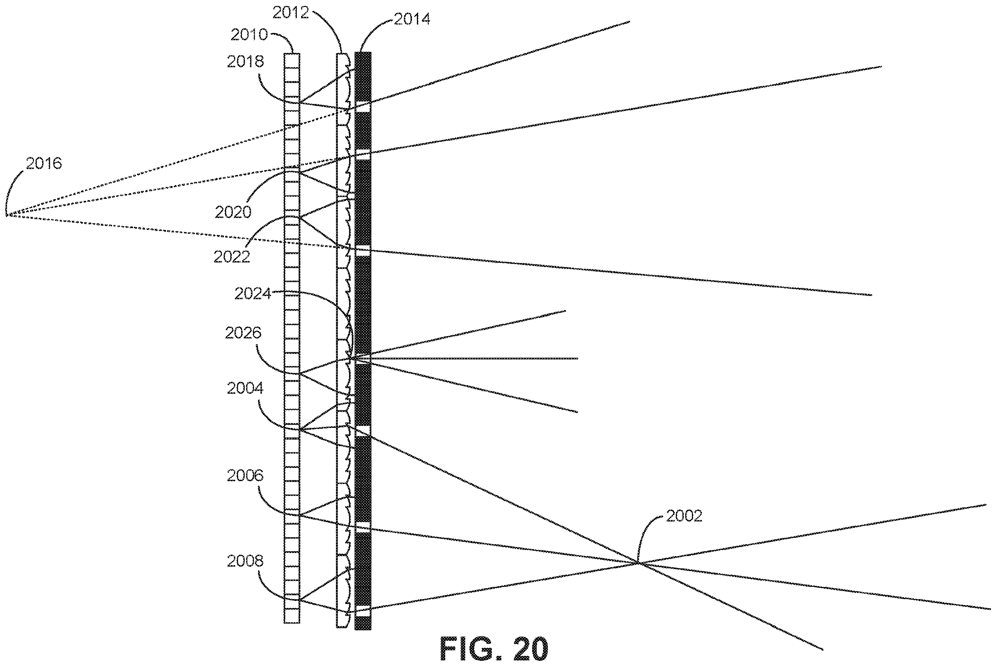

FIG. 20 is a schematic cross-sectional side or top view illustrating an example configuration used for formation of voxels according to some embodiments. In some embodiments, the optical system may implement the use of crossing beams to form voxels. These voxels may be formed at different distances from the display surface (e.g., in front of the display, behind the display, and/or on the display surface). FIG. 20 is a schematic diagram illustrating an example voxel 2002, which is created in front of the display at a specific focal distance with beams originating from light sources at positions 2004, 2006, 2008 on the light-emitting layer 2010. The light from the sources at positions 2004, 2006, 2008 is refracted to different directions by the optical layer 2012, and spatial light modulator 2014 allows the transmission of light directed toward the voxel 2002 while blocking light that is not directed toward voxel 2002 and is not used to generate other voxels.

In the example of FIG. 20, a voxel 2016 is generated at a voxel position behind the display by crossing the virtual extensions of the beam sections emitted from light sources at positions 2018, 2020, and 2022 on the light-emitting layer 2010. The light from the sources at positions 2018, 2020, and 2022 is refracted to different directions by the optical layer 2012, and spatial light modulator 2014 allows the transmission of light directed from the position of voxel 2016 while blocking light that is not directed from the position of voxel 2016 and is not used to generate other voxels. In some embodiments, several sources may be used in order to compensate for the lower light intensity propagating to the eye direction due to wider angular spread of the beam sections.

In the example of FIG. 20, a voxel 2024 is generated at a position on the display. Light from a source at position 2026 is scattered by a translucent optical tile on the optical layer 2012 at the voxel position 2024. Spatial light modulator 2014 allows the transmission of the scattered light to the exterior of the display while blocking the transmission of light from other optical tiles.

FIG. 20 shows an example in which a voxel 2024 is generated on the display surface while other voxels (2002, 2016) are generated in front of and behind the display surface. However, in some embodiments, the display may operate to generate only voxels on the display surface. This may be done by operating the spatial light modulator such that only light passing through translucent optical tiles reaches the exterior of the display device. Such voxels may be used as 2D pixels for display of a 2D image on the display surface.

In some embodiments, voxels are created by combining two beams originating from two neighboring sources as well as from two beam sections that originate from a single source. The two beam sections may be used for creating a single beam focus for the correct eye retinal focus cue, whereas the two combined beams may be used for covering the larger FOV of the viewer eye pair. This configuration may help the visual system correct for eye convergence. In this way, the generation of small light emission angles for single eye retinal focus cues and the generation of larger emission angles for eye convergence required for the stereoscopic effect are separated from each other in the optical structure. The arrangement makes it possible to control the two angular domains separately with the display's optical design.

In some embodiments, focal surface distances may be coded into the optical hardware. For example, the optical powers of the periodic layer feature tiles may fix the voxel depth co-ordinates to discrete positions. Because single eye retinal focus cues may be created with single emitter beams, in some embodiments a voxel may be formed by utilizing only two beams from two emitters. This arrangement may be helpful in simplifying the task of rendering. Without the periodic features, the combination of adequate source numerical aperture and geometric magnification ratio may call for the voxel sizes to be very large and may make the resolution low. The periodic features may provide the ability to select focal length of the imaging system separately and may make smaller voxels for better resolution 3D images.

In some embodiments, created beams may propagate to different directions after the periodic layer. The distance between light emitting layer and periodic beam focusing layer may be used as an aperture expander. In order to reach a specific optical performance, it may be helpful to match the applicable distance values to the size/pitch of the periodic layer feature and the sizes of the individual tiles. It may be useful to expand the single beam aperture as much as possible in order to improve beam focus and to reduce the diffraction effects connected to small apertures. This may be especially useful for voxel layers created closer to the viewer as the eye resolution becomes higher and geometric magnification forces larger voxel sizes. Both beam sections may cross at the voxel position on the focal surfaces and reach the viewer's single eye pupil in order to create the right retinal focal cues without too much diffraction blur.

### 3D Display Properties

One factor to be considered in the design of a 3D display structure is the fact that optical materials refract light with different wavelengths to different angles (color dispersion). This means that if three colored pixels (e.g., red, green and blue) are used, the different colored beams are tilted and focused to somewhat different directions and distances from the refractive features. In some embodiments, color dispersion may be compensated in the structure itself by using a hybrid layer where, e.g., diffractive features are used for the color correction. As the colored sub-pixels may be spatially separated on the LEL, there may also be some small angular differences to the colored beam projection angles. If the projected images of the source components are kept small enough on the focal surface layers, the three colored pixels will be imaged next to each other and combined into full-color voxels by the eye in a manner analogous to what is seen with the current regular 2D screens where the colored sub-pixels are spatially separated. The colored sub pixel images of the 3D display structure are highly directional and it may be useful to ensure that all three differently colored beams enter the eye through the pupil.

Physical size of the light emitting elements and total magnification of the display optics may affect the achievable spatial resolution on each 3D image virtual focal surface. In the case that the light emitting pixels are focused to a surface that is located further away from the display device, the geometric magnification may make the pixel images larger than in the case where the focal surface is located closer to the display. In some embodiments, the use of the periodic layer makes it possible to increase the focal length without making the aperture size of the optics or the source images at the display surface too large. This is a performance benefit of the presented method as it makes it possible to achieve relatively high resolution 3D image layers both at the display surface and at the focal surfaces outside the display.

As explained previously, diffraction may also affect achievable resolution, e.g., in the case that the light emitter and microlens aperture sizes are very small. The depth range achievable with the light field display and real light field rendering scheme may be affected by the quality of beam collimation coming from each sub-pixel. The sizes of the light-emitting pixels, the size of the periodic layer tile aperture, and tile's effective focal length are three parameters that may affect collimation quality. Small SLM apertures in front of the periodic layer may also cause diffraction if the pixel size is small (e.g., in the case of mobile devices). However, the selection of aperture size may be made in such a way that larger apertures (or larger aperture pair distances) are used when the voxel distance is larger. In this way, diffraction effects may be minimized in order to achieve better resolution. In particular, some embodiments operate to render the voxels for single eye focus with a single source that generates two beam sections with the help of the optical structure. This allows beam interference and reduced diffraction blur.

In some embodiments, a continuous emitter matrix on the light-emitting layer allows for very wide fields of view. Due to the fact that the focal length used in geometric imaging may be selected with the periodic mosaic layer, the disclosed systems and methods make it possible to achieve both good resolution and large viewing zone simultaneously. However, this may come with the cost of lowered light efficiency as only a smaller portion of the emitted light may be used in voxel formation when the effective focal length of the focusing tiles is increased for better resolution. A large portion of the optical power may be absorbed to the spatial light modulator layer if only some parts of the beams are passed for the image formation.

In some embodiments, a periodic layer positioned in front of the light sources makes it possible to utilize wide light emission patterns typical to components like OLEDs and µLEDs. Because the lens cluster layer is continuous, there may not be a need to align the mosaic tiles to specific sources if the source layer has a continuous matrix of emitters. However, as the typical Lambertian emission pattern makes light intensity drop for larger angles in comparison to the surface normal direction, it may be helpful to calibrate the beam intensities with respect to beam angle. This calibration or intensity adjustment may be made, e.g., by selecting the spatial light modulator transmissions accordingly or by adjusting the light emission of the source with current or pulse width modulation.

In some embodiments, a spatial light modulator positioned in front of the periodic layer may be used for blocking stray light coming from the previous optical layers. In some embodiments, the optical layers may be treated with antireflection coatings in order to avoid multiple reflections from the refractive surfaces. Such reflections may cause stray light that lowers image contrast. Because the spatial light modulator is used for blocking parts of the emitted beams, it may also be used effectively to block the stray reflections from optical elements. In some embodiments, the spatial light modulator functions as an adaptive mask that has small adjustable apertures in front of selected source clusters. This mask may be swept across the display surface. During these sweeps it may block or pass the appropriate beams and suppress the localized stray light emissions simultaneously.

### 3D Display Rendering Schemes

Several different kinds of rendering schemes may be used together with the presented display structures and optical methods. Depending on the selected rendering scheme, the realized display device may be a true 3D light field display with multiple views and focal surfaces or a regular 2D display. This latter functionality may be supported also by optical hardware design as described above.

In some embodiments, a 3D light field rendering scheme creates several focal points or focal surfaces in front of the viewer(s) in front of or behind the physical display surface in addition to the multiple viewing directions. It may be useful to generate at least two projected beams for each 3D object point or voxel. Reasons for using at least two beams may include (i) that a single sub-pixel inside the display should have a field of view that makes it visible to only one eye at any given time, and (ii) that the created voxel should have a field of view that covers both eyes simultaneously in order to create the stereoscopic view. The voxel field of view may be created as a sum of individual beam fields of view when more than one beam is used at the same time. For all voxels that are between the display and observer, it may be helpful to have the convergence beams cross in front of the display at the correct voxel distance. In a similar way, it may be helpful for the voxels positioned at a further distance from the observer than the display to have a beam pair virtually crossing behind the display. The crossing of the (at least) two beams helps to generate a focal point (or surface) that is not at the display surface only. It may be useful to have the separate beams focus to the same spot where they cross. The use of mosaic periodic layer features makes it possible to create the single beam focuses with this method, and more natural retinal focus cues may be created.

Rendering a truly continuous range of depths on a 3D display may involve heavy computation. In some embodiments, the 3D data may be reduced to certain discrete depth layers in order to reduce computational requirements. In some embodiments, discrete depth layers may be arranged close enough to each other to provide the observer's visual system with a continuous 3D depth experience. Covering the visual range from 50 cm to infinity may take about 27 different depth layers, based on the estimated human visual system average depth resolution. In some embodiments, the presented methods and optical hardware allow creation of multiple focal surfaces that may be displayed at the same time due to the fact that the spatially separated mosaic tiles and SLM are used for the depth layer selection. In some embodiments, observer positions may be actively detected in the device and voxels may be rendered to only those directions where the observers are located. In some embodiments, active observer eye tracking is used to detect observer positions (e.g., using near-infrared (NIR) light with cameras around or in the display structure).

One trade-off situation associated to the rendering scheme may be found between spatial/angular and depth resolutions. With a limited number of pixels and component switching speeds, emphasizing high spatial/angular resolution may have the cost of fewer focal planes (lower depth resolution). Conversely, having more focal planes for better depth resolution may come with the cost of a more pixelated image (low spatial/angular resolution). The same tradeoff may apply to the data processing at the system level, as more focal planes may involve more calculations and higher data transfer speeds. In the human visual system depth resolution decreases logarithmically with distance, which may allow for the reduction of depth information when objects are farther away. Additionally, the eyes may resolve only larger details as the image plane goes farther away, which may allow for the reduction of resolution at far distances. In some embodiments, rendering schemes are optimized by producing different voxel resolutions at different distances from the viewer in order to lower the processing requirements for image rendering. The tradeoffs connected to the rendering scheme may also be addressed on the basis of the presented image content, enabling, e.g., higher resolution or image brightness.

In some embodiments, three differently colored pixels are implemented on the LEL or on the SLM in order to create a full-color picture. The color rendering scheme may involve systems and/or methods to adapt to the fact that different colors are refracted to somewhat different angular directions at the periodic layer. In addition to a special color rendering scheme, some of this dispersion may be removed with hardware, e.g., by integrating diffractive structures to the periodic layer features for color correction. This is especially useful in compensating for the different focus distances of the refractive tiles. An example color rendering scheme, in accordance with some embodiments, is to use white illumination and an SLM that has color filters. White beams may be generated with a combination of, e.g., blue µLEDs and thin layer of phosphor. In this case, the beam colors are selected in the SLM (e.g., LCD panel) layer for each focal layer voxel separately, and the three colors are combined in the eye in a manner similar to current regular 2D displays.

### Implementation Examples

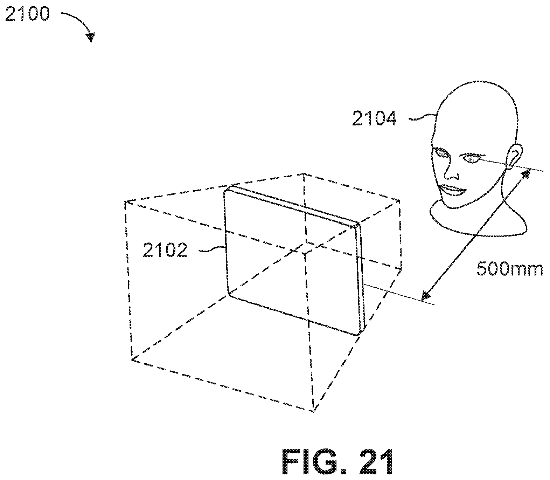

FIG. 21 is a schematic perspective view illustrating an example configuration of a 3D display and a viewer according to some embodiments. Specifically, FIG. 21 depicts an example viewing configuration 2100 for a mobile device with a 6" 3D display 2102 placed at 500 mm distance from a single viewer 2104. The display forms a light field image to a virtual image zone, which is located both in front of and behind the mobile device. For some embodiments, the example image zone covers the distances from 400 mm to 576 mm in front of the viewer, as measured from the viewer eye position. For some embodiments, the example image zone may be other sizes, such as 176mm or 181mm that is approximately centered in front and behind the display. The display 2102 is able to generate multiple voxel forming beams both in the horizontal and vertical directions with the presented optical structure. The beams are focused to two virtual focal surfaces, one at the front and one at the back of the image zone. A third focal surface lies on the device itself. The distances between these three discreet focal surfaces are set to correspond to eye lens optical power change of ≤ 0.5 diopters from the designated viewing distance, making the 3D image look continuous.

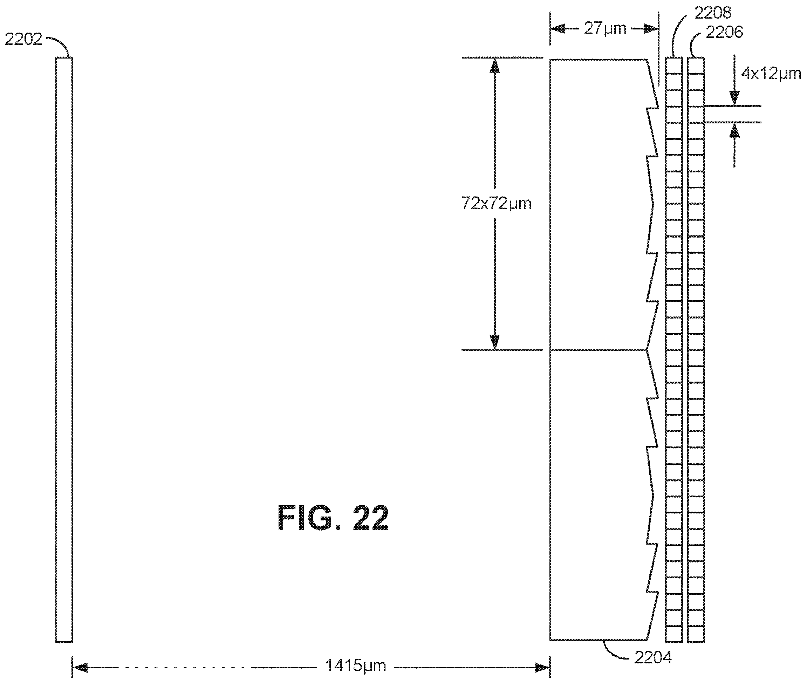

FIG. 22 is a schematic side view illustrating a portion of an example display's optical structure according to some embodiments. FIG. 22 illustrates the structure and measurements (in µm) of the display's optical design, in accordance with some embodiments. In the example, light is emitted from a continuous µLED matrix 2202 where component size is 2 µm x 2 µm and pitch 3 µm. Components are overcoated with a phosphor layer that converts the emitted blue light into wider white light spectrum. A periodic layer 2204 is placed at around 1.4 mm distance from the emitters and it is made as a foil of around 0.03 mm thickness, which has a polycarbonate substrate layer and micro-optic features made by UV-curing. An LCD panel 2206 with RGB color filters 2208 is placed right next to the periodic layer and functions as the spatial light modulator. The whole optical structure may have a thickness less than 2 mm.

For some embodiments, a 0.5 mm thick LCD panel stack with polarizers and patterned liquid crystal layer is placed in front of the light generating part of the system. The LCD panel may be positioned as close to the periodic layer component as feasible, as shown in FIG. 22. The LCD has 12 µm x 12 µm pixels that have red, green and blue color filters (4 µm wide each) used for generating colored voxels. The color filter arrangement in this example may be the same as shown in FIG. 19. The pixel size of the panel is equal to the smallest periodic layer tile sizes, making it possible to selectively block beams originating from the different tiles. It may be useful to accurately align the periodic features and LCD.

It should be noted that in FIG. 22 and other drawings, measurements are given only as particular examples. Display devices with different measurements may alternatively be constructed according to the teachings of the present disclosure.

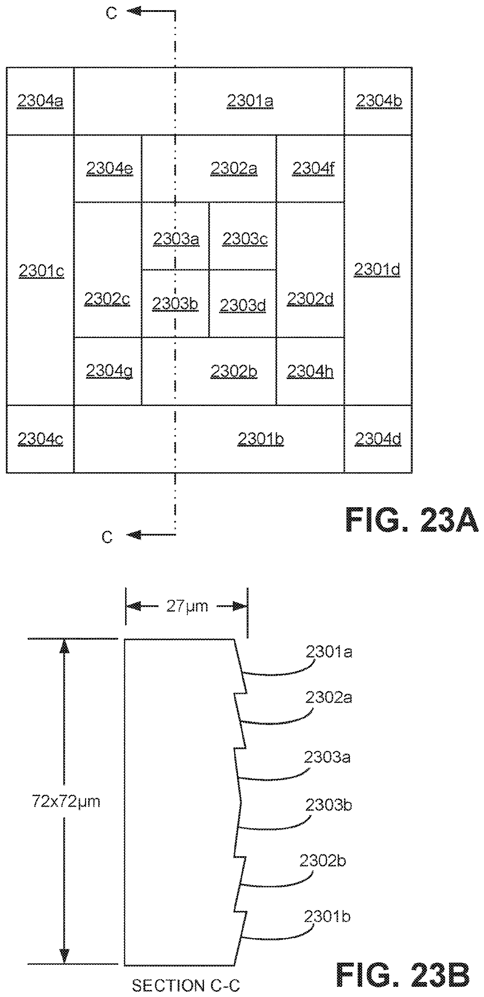

FIG. 23A is a schematic front view illustrating an example mosaic cell used as a periodic feature according to some embodiments. FIG. 23A illustrates a periodic feature of the display's optical design, in accordance with some embodiments. In this example, the periodic feature is divided into a mosaic pattern with four different sets of tiles. A first set of tiles, 2301a-d, and a second set of tiles, 2302a-d, are used for creating well-collimated focusing beams directed to a single eye of the viewer. These tiles may be optically smooth and may have their own respective radius of curvature and tilt values. The periodic feature shown in FIG. 23A has four of each of these tiles and they are arranged to the four sides of the rectangle forming two orthogonal pairs. These tiles focus two beam sections in horizontal and vertical directions. Opposing tiles may be tilted toward opposite directions with respect to the feature surface normal.

In an example in accordance with FIG. 23A, tiles 2301a-d at the edge of the periodic feature have radius values of around 0.80 mm and are tilted by 13.0°. These tiles may be used to form voxels at a focal surface 400 mm away from the viewer. A third set of tiles includes tiles 2303a-d. The four tiles 2303a-d are at the center of the feature have flat surfaces that are tilted by 7.4°. These form the directional voxels on the display surface and they may be visible to both eyes at the same time due to the flat surface shapes. The set of tiles 2302a-d have radius of around 0.70 mm, and they are tilted by 12.0°. These tiles may be used for forming the voxels behind the display at viewing distance of 576 mm.

The eight tiles 2304a-h have flat surfaces that are parallel to the feature surface and are optically rough (e.g., translucent) for scattering light. The tiles in the set 2304a-h may be used for forming a 2D image when the display is used in optional 2D mode. These tiles may scatter light to a wider angular range making it possible to extend the viewing window and include more than one viewer. Resolution may be relatively high in the display 2D mode, as there are more tiles dedicated to the 2D image and the tiles are smaller.

In a particular embodiment, tiles 2301a-d have dimensions of 12×48 µm, tiles 2302a-d have dimensions of 12×24 µm, tiles 2303a-d have dimensions of 12×12 µm, tiles 2304a-k have dimensions of 12×12 µm, and the mosaic cell has a thickness of 27 µm.

FIG. 23B is a schematic cross-sectional view of the mosaic cell of FIG. 23A along section C-C.

In order to test the structure's functionality and achievable resolution, a set of simulations was performed with the optical simulation software OpticsStudio 17. The optical display structure was placed 500 mm from the viewing window, and an intermediate detector surface was placed 100 mm from the display surface between the device and the viewer. The respective viewing distance from the voxel was 400 mm. Micro-LED sources with a 2 µm x 2 µm surface area and 3 µm pitch were used as sources for simulations. A simplified eye model was constructed from a 4 mm aperture (pupil) and two ideal paraxial lenses that were used for adjusting the eye focal length (around 17 mm) to the appropriate focus distance.

A single beam spot image was simulated on the retina. Irradiance distributions were generated for a 1 mm x 1 mm detector surface located on a virtual focal surface 400 mm away and for a 0.1 mm x 0.1 mm detector surface located on the retina, which was simulated as an eye model. These simulations were made with red 656 nm wavelength light, which represents one of the longest wavelengths in the visible light range. The results simulated the geometric imaging effects. Diffraction effects may blur the spots depending on the wavelength used and the blocking aperture sizes (which may be created with an LCD). For some embodiments, because example simulations used two apertures to generate a single source split beam, the diffraction effects may be reduced somewhat due to the interferometric effect if the two beam sections are combined to form a part of the voxel. Because an eye sees only one beam, this interference effect is most likely also visible on the eye retina.

The spot size obtained with a single source and one generated beam split into two crossing sections is around 150 µm at the intermediate 400 mm focal surface. A single source generated a beam which split into two crossing sections around 150 µm apart on the intermediate 400 mm focal surface. This spot size was obtained with LCD pixel mask apertures that were 12 µm x 48 µm in size corresponding to the periodic feature tiles T1. For this single split beam, the apertures were not located on top of a single periodic feature, but the distance between the apertures was 360 µm corresponding to the width of 5 periodic features. On the display surface, the beam sections covered a larger area than on the voxel focus distance, and a single eye sees them as a split image or blurred spot. This beam property initiates the correct focal cue for the single eye because the smallest spot size is obtained at the 400 mm focal distance.

On the display surface, the spot size of around 25 µm is obtained when the central LCD aperture mask is used with four tiles (such as tiles 2303a-d). However, because the periodic layer feature pitch is the determining spatial factor on the display surface, the voxels generated on the structure are spaced 72 µm apart. The resolution on the display surface approximates a full HD display. The possible screen-door effect associated to a sparse pixel matrix on the display surface may be mitigated by using the 2D tiles (2304a-h) simultaneously. The simulation results indicate that, for some embodiments, the maximum achievable voxel resolution at the front of the 3D image zone is approximately VGA quality due to the larger voxel size generated with a single split beam.

To test image resolution of a focal surface behind the display, simulations were made for an eye focused on distances of 400 mm, 500 mm, and 576 mm, and the beams associated with each distance were ray-traced for the eye retina model. For the 400 mm focal surface simulation, the eye saw a spot of around 9 µm spot. For the 500 mm and 576 mm focal surface simulations, the eye saw spots of around 10 µm and 11 µm spots, respectively. For some embodiments, retinal image resolutions are close to each other, and the visible voxel size increases slightly with distance.

### Example Optical Structure and Function with Collimating Surface

FIG. 24A is a schematic side view illustrating a portion of an example 3D display according to some embodiments. FIG. 24B is a schematic cross-sectional view of an example mosaic cell according to some embodiments. Some embodiments provide an optical method and basic construction of an optical system that may be used for creating high-resolution 3D images with crossing beams. As shown in the example in FIG. 24A, light is generated on a light emitting layer (LEL) 2404 containing individually addressable light-emitting pixels. In some embodiments, the light emitting layer may be, e.g., a µLED matrix, an OLED display, or an LCD screen with a backlight. A light collimating layer 2404, a layer of repeating optical elements, collimates emitted light into several beams that hit a periodic optical layer 2406. Several individual lenses or optical features in the light collimating layer 2404 may work together as a cluster. The periodic layer may have repeating small features (e.g. optical tiles) arranged as several zones that focus different parts of the beams into different focus distances. FIG. 24B shows three example zones (2452, 2454, 2456) for a cross-sectional side view of an example periodic feature. For example, light passing through zone 2452 may be focused at first focal distance. Light passing through zone 2454 may be focused at a second focal distance, and light passing through zone 2456 may be focused at a third focal distance. A spatial light modulator (SLM) 2408 may be used to selectively block or pass the beam sections that are used for 3D image formation. The blocking and passing of beam sections may be used to form images on a number of focal surfaces which may be determined by properties of the periodic layer.

In the example of FIG. 24A, light is emitted from a position 2410 on the light-emitting layer 2402. The emitted light is collimated by the collimating layer 2404 and refracted by optical tiles in periodic optical layer 2406. The spatial light modulator 2408 operates to allow passage of light directed toward a voxel position 2412 while blocking light that is not used to generate any voxel. (For the sake of simplicity, light rays that are ultimately blocked are not illustrated in FIG. 24A.) Light is also emitted from a position 2414 on the light-emitting layer 2402. The emitted light is collimated by the collimating layer 2404 and refracted by optical tiles in periodic optical layer 2406. The spatial light modulator 2408 operates to allow passage of light directed toward the voxel position 2412 while blocking light that is not used to generate any voxel. In particular, the spatial light modulator 2408 allows the passage of light that was refracted by optical tiles 2454 of the respective mosaic cells. Another voxel 2416 may be generated analogously using the optical tiles 2456 of the respective mosaic cells.

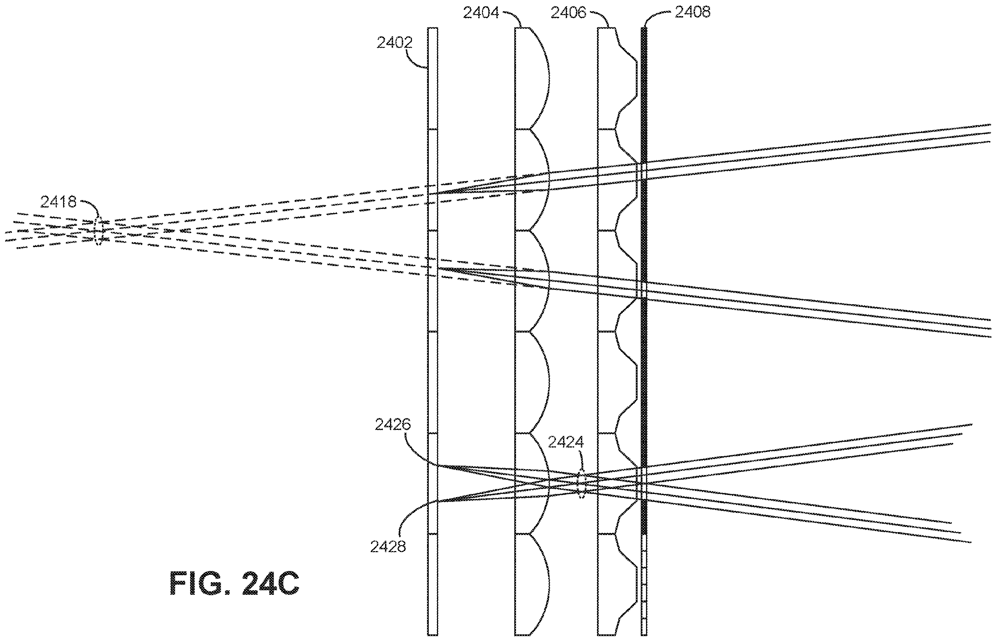

While FIG. 24A illustrated the generation of voxels in front of the display, FIG. 24C illustrates the generation of voxels at and behind the display surface using the same display apparatus as in FIG. 24A. To generate a voxel at position 2418, light is emitted from positions 2420 and 2422 of light-emitting layer 2402. The light is collimated by the collimating layer 2404 and refracted by the periodic optical layer 2406. The spatial light modulator 2418 allows passage of light directed from the voxel position 2418 while blocking other light (not shown) emitted from positions 2420 and 2422. In some configurations, the spatial light modulator may allow only passage of light through optical tiles of the periodic layer that have no optical power, so that collimated light entering the tiles remains collimated upon exiting the tiles.

To generate a voxel at position 2424, light is emitted (not necessarily simultaneously) from positions 2426 and 2428 of light-emitting layer 2402. The light is collimated by the collimating layer 2404 and refracted by the periodic optical layer 2406. The spatial light modulator 2418 allows passage of light directed from the voxel position 2418 while blocking other light (not shown) emitted from positions 2420 and 2422. The voxel 2424 may be displayed using time multiplexing, with the spatial light modulator 2418 having one configuration while light is emitted from position 2424 and another configuration while light is emitted from position 2428.

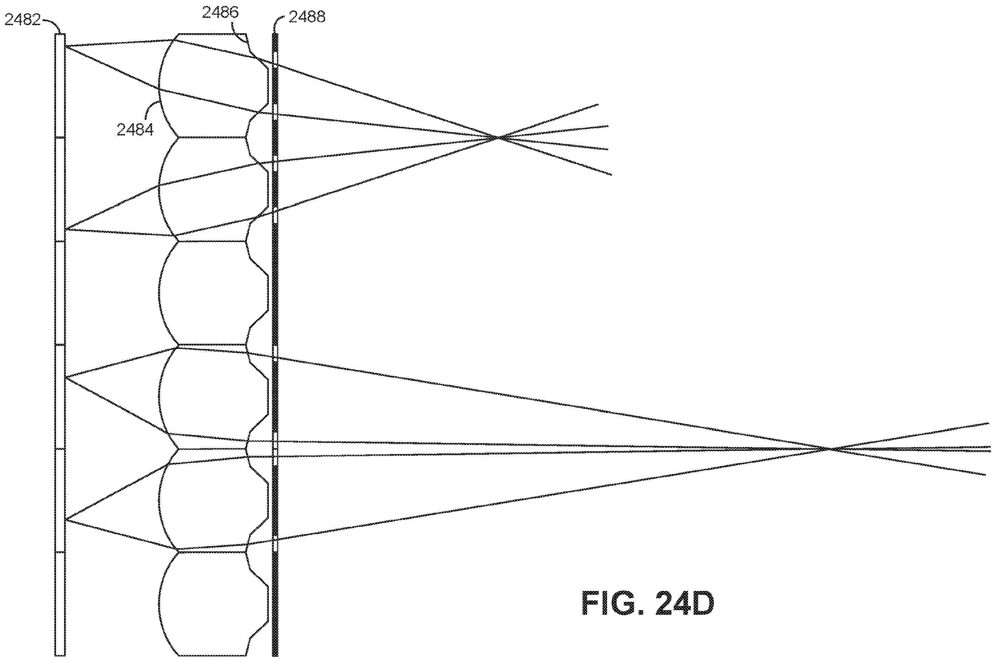

FIG. 24D illustrates another embodiment of a display device. The device includes a light-emitting layer 2482, a collimating layer 2484, a periodic optical layer 2486, and a spatial light modulator 2488. In the example of FIG. 24D, the collimating layer 2484 and the periodic optical layer 2486 are opposite surfaces of the same sheet of material.

In some embodiments, such as those in FIGs. 24A-24D, the light collimating layer may include, e.g., a microlens/lenticular lens polycarbonate sheet or a foil with embossed diffractive structures. As most sources (e.g., µLEDs) emit light into fairly large numerical apertures (NA), several individual lenses or optical features in the light collimating layer may work together as a cluster. A cluster may collimate and focus the light from a single emitter into several beam sections that form light source images. The number of elements in the cluster may be, e.g., 3 x 3 or 5 x 5, depending on the source numerical aperture (NA), the distance between the light-emitting layer and collimating optics layer, and the aperture size of the individual collimating lens or element. In order to reduce stray light, an array of apertures may be placed on top of the microlens array or between the microlens sheet and light emitting layer, optically isolating the generated beams from each other. For example, a punctured plastic sheet may be implemented for this function. In some embodiments, the optical structures may be one-dimensional (e.g., cylindrical lenses) to provide views across one axis (e.g., providing only horizontal views). In some embodiments, the optical structures may be two-dimensional (e.g., rotationally symmetric microlenses) for example to provide views across two axes (e.g., providing views in both horizontal and vertical directions).

In some embodiments, the periodic layer contains repeating periodic features that are formed from smaller zones or segments that are smaller than the aperture size of the collimating lens or optical feature. In such embodiments, the collimated beam cross-sections are implemented to be bigger than the single zones or segments of the periodic layer so that a single beam covers several of these optical features simultaneously. Each zone of the periodic layer feature may have a different optical power depending on properties such as the refractive index or/and surface shape. Surface shapes may be, for example, simple flat facets or more continuous curved surfaces. In some embodiments, the periodic layer may include, e.g., a polycarbonate sheet or a foil with embossed diffractive structures. In some embodiments, the periodic layer may include a sheet with graded index lens features or a holographic grating manufactured by exposing photoresist material to laser-generated interference pattern.

In some embodiments, periodic layer segments are arranged into zones in such a way that the beam is split into different sections that travel to slightly different directions depending on the zone optical powers. The beam sections may be focused to different distances from the optical structure imaging the sources and may be focused to different sized spots, depending on the distance. Spots imaged further away from the display may be bigger than spots imaged to a shorter distance as discussed previously. However, as the effective focal length for each feature zone may be selected individually, the geometric magnification ratio may also be affected resulting in smaller source image spots and better resolution.

For some embodiments, neighboring light emitters inside one source matrix are imaged into a matrix of spots. Together, the source matrices, collimator optic clusters, and periodic layer features form a system that is capable of generating several virtual focal surfaces into the 3D space around the display. In some embodiments, sources from neighboring matrices are imaged to different directions with the collimating lens cluster and to different distances with the periodic layer.

In some embodiments, the spatial light modulator placed in front of the periodic layer may be, e.g., an LCD panel used for selectively blocking or passing parts of the projected beams. As the optical structure is used for creation of the multiple beams, there may be no clearly defined display light field pixel structures and the LCD may be used as an adaptive mask in front of the light beam generating part of the system. In order to implement an adequately small pixel size, it may be useful for the pixel size to be in the same size range or smaller than the periodic feature zone size. Pixels may be arranged in a regular rectangular pattern or they may be custom made to the periodic layer optical features. The pixels may also contain color filters for color generation if the light emitted from the light-emitting layer is white as in the case of, e.g., phosphor overcoated blue **µLED** matrix. But, if the light-emitting layer contains colored pixels (e.g., separate red, green and blue µLEDs) the spatial light modulator may be used for intensity adjustment of the beams. It may be useful to implement the spatial light modulator component to be fast enough for reaching an adequate refresh rate for a flicker-free image. The spatial light modulator and light-emitting layer may work in unison when the image is rendered. It may be particularly useful for the light-emitting layer and spatial light modulator to be synchronized. This makes it possible to use the faster refresh rates of, e.g., a µLED matrix so that the spatial light modulator may be refreshed with a minimum of 60 Hz rate. Eye tracking may also be used for lowering the requirements for the update speed by rendering images only to some specified eyebox regions rather than rendering images to the display's entire field of view.

In some embodiments, created beams may propagate to diverging directions after the lens cluster. The distance between the lens cluster and periodic refocusing layer may be used as an aperture expander. In order to reach a specific optical performance, it may be helpful to match the applicable distance values to the lens pitch of the lens cluster and the size/pitch of the periodic layer feature. It may be useful to expand the aperture as much as feasible in order to improve beam focus and to reduce the diffraction effects connected to small apertures. Both beam sections may cross at the voxel position on the focal surfaces and reach the viewer's single eye pupil in order to create the correct retinal focal cues without too much diffraction blur.

In some embodiments, voxels are created by combining two beams originating from two neighboring source clusters as well as from two beam sections that originate from a single source. The two beam sections may be used for creating a single beam focus for the correct eye retinal focus cue, whereas the two combined beams may be used for covering the larger FOV of the viewer eye pair. This configuration may help the visual system correct for eye convergence. In this way, the generation of small light emission angles for single-eye retinal focus cues and the generation of larger emission angles for eye convergence desired for the stereoscopic effect are separated from each other in the optical structure. This arrangement makes it possible to control the two angular domains separately with the display's optical design.

In some embodiments, the focal surface distances may be coded into the optical hardware. For example, the optical powers of the periodic layer feature zones may fix the voxel depth coordinates to discreet positions. Because single-eye retinal focus cues are created with single emitter beams, in some embodiments a voxel may be formed utilizing only two beams from two emitters. Without the periodic features, the combination of adequate source numerical aperture and geometric magnification ratio may call for the voxel sizes to be very large and may make the resolution low. The periodic features may provide the ability to select the focal length of the imaging system separately and may make smaller voxels for better resolution 3D images.

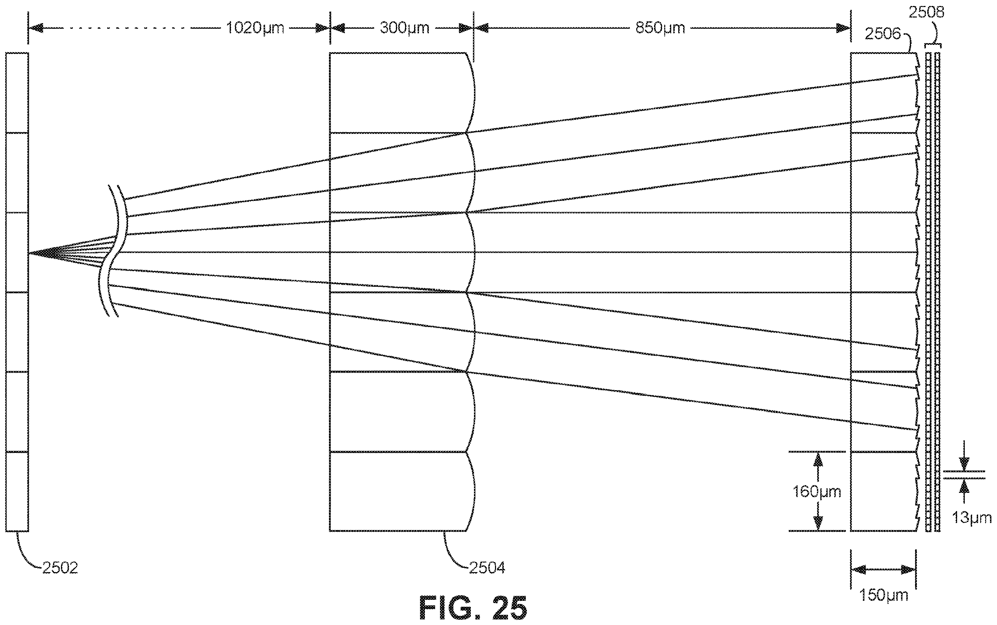

FIG. 25 is a schematic cross-sectional top view illustrating an example display structure according to some embodiments. FIG. 25 illustrates the structure and measurements (in µm) of the display's optical design, in accordance with some embodiments. In the example, light is emitted from a continuous **µLED** matrix 2502 where component size is 2 µm x 2 µm and pitch 3 µm. Components are overcoated with a phosphor layer that converts the emitted blue light into wider white light spectrum. Rotationally symmetric collimator lenses 2504 are placed at around 1 mm distance from the µLEDs and the array is made from polycarbonate as a hot-embossed 0.3 mm thick microlens sheet. The plano-convex aspheric collimator lenses have 0.65 mm radius of curvature and conic constant of -0.18, which gives a back focal length of around 1 mm. The periodic layer 2506 is made as 0.15 mm thick sheet, which has a polycarbonate substrate layer and micro-optic features made by UV-curing. This layer is positioned at 0.85 mm distance from the collimator optics layer 2504. Aperture sizes of the collimating lens and single periodic feature are 0.16 mm.

The total thickness of the light-generating optical structure placed behind an LCD panel is less than 2.5 mm. A 0.5 mm thick LCD panel stack with polarizers and patterned liquid crystal layer is placed in front of the light generating part of the system. The LCD panel stack 2508 may be positioned as close to the periodic layer component as feasible, as shown in FIG. 25. The LCD has 13 µm pixels that have red, green and blue color filters that are used for generating colored voxels. The pixel size of the panel in this example is half the size of the periodic layer zone sizes making it possible to selectively block beams originating from the different zones.

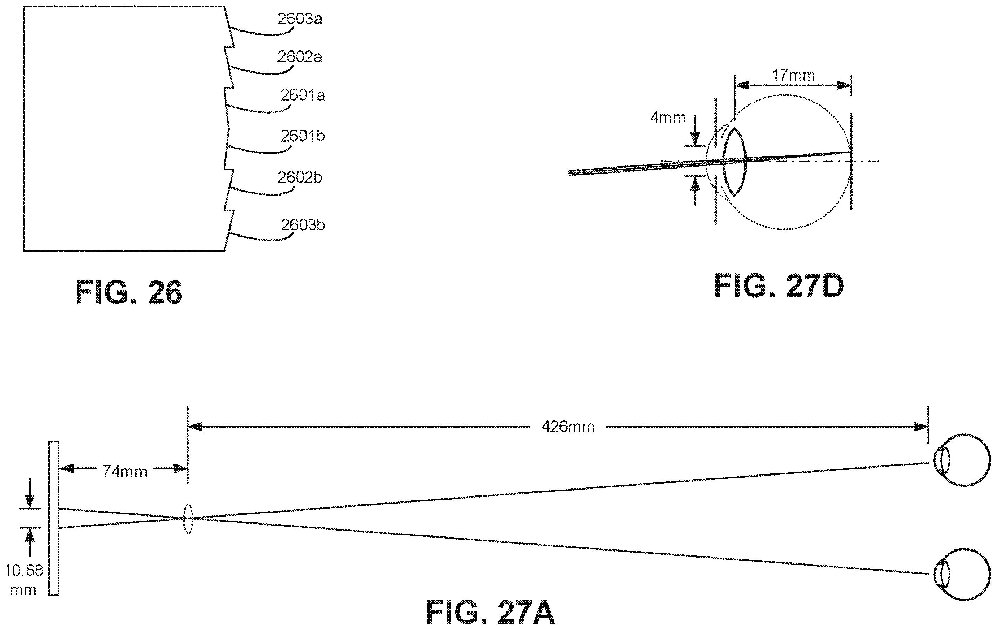

FIG. 25 also shows three split beam pairs that originate from a single source and from the different periodic layer zones. Each beam section pair is used for forming a single directional beam that is focused to a specific distance determined by tilt angles of different optical tiles within the mosaic cells. The tilt zone angles of an example mosaic cell of FIG. 25 are illustrated in FIG. 26.

FIG. 26 is a schematic cross-sectional top view illustrating an example periodic structure of a portion of a display structure according to some embodiments. In the example of FIG. 26, optical tiles 2601a-b are used for creation of the voxels located on the display surface. Optical tiles 2602a-b are used for creation of the voxels located behind the display surface at a distance of 607 mm from the viewer. Optical tiles 2602a-b are used for creation of the voxels located in front of the display surface at a distance of 426 mm from the viewer.

For some embodiments, the periodic features are divided into six zones that are each around 27 µm wide for a total of 160 µm as shown in FIG. 26. The three zones shown in FIG. 26 have flat facets (facets with planar surfaces) that are tilted to different angles (e.g., 6.9°, 13.8°, and 14.5°) with respect to the optical axis. The other set of three zones in the repeating feature have the same shapes but with opposite tilt angles. The example periodic feature of FIG. 26 is approximately 150 µm by 160 µm.

FIG. 27A is a schematic top view illustrating an example ray tracing geometry of a display structure according to some embodiments. In order to test the structure functionality and achievable resolution, a set of simulations was performed with the optical simulation software OpticsStudio 17. FIG 27A presents the raytracing geometry in the horizontal direction used in voxel spatial resolution simulations. The display optical structure was placed at 500 mm distance from the viewing window and one intermediate detector surface was placed between the device and viewer at distance of 74 mm from the display surface. The respective viewing distance from the voxel was 426 mm.

Two beam bundles used for generating voxels at the 426 mm virtual focal surface originated from two distinct locations on the display surface. The distance between these points was around 11 mm. With this distance between emitted beams the two eyes are able to get the right illumination angles for the correct eye convergence angle of 8.6° when the interpupillary distance is 64 mm. The eyebox may be expanded to include variations on interpupillary distances and viewer location by using more crossing beams for the generation of a single voxel, as this would increase the voxel field of view.

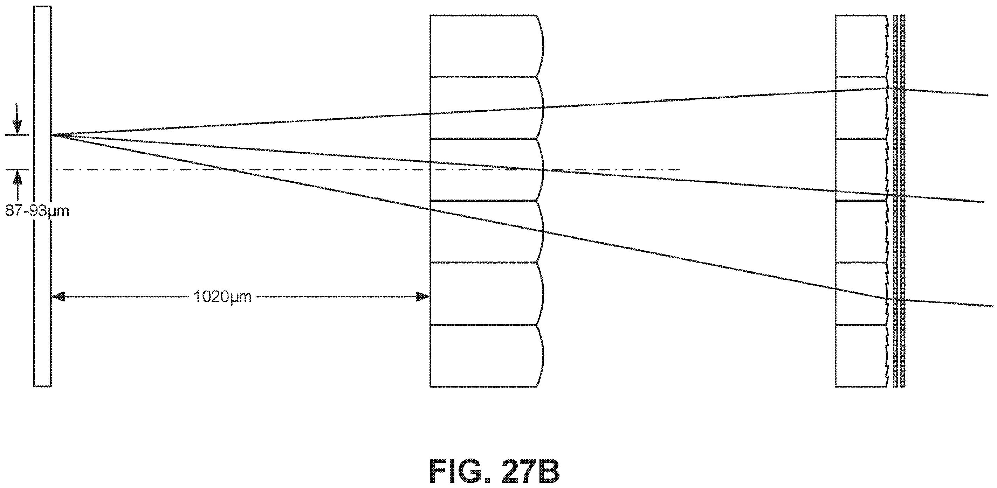

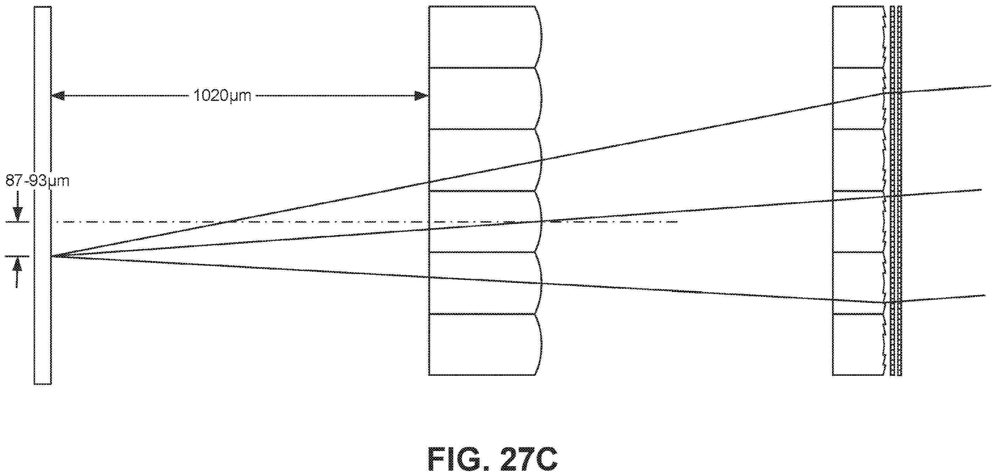

FIG. 27B is a schematic top view illustrating an example ray tracing geometry of light beams emitted towards the left eye according to some embodiments. FIG. 27C is a schematic top view illustrating an example ray tracing geometry of light beams emitted towards the right eye according to some embodiments. In a ray trace simulation, six square light emitting surfaces were used with the µLED measurements of 2 µm x 2 µm surface area and 3 µm pitch. Three of the emitters were simulated for creation of the beams for the right eye and three were used for the left eye beams. The three beams for each eye create an expanded aperture of approximately 0.6mm.

FIG. 27D is a schematic top view illustrating an example ray tracing geometry for a model of an eye according to some embodiments. The eye model was constructed from a 4 mm aperture (pupil) and two ideal paraxial lenses that were used for adjusting the eye focal length (around 17 mm) to the appropriate focus distance. The ray trace picture of FIG. 27D shows that three beams from neighboring sources are entering the eye through the aperture, which means that the eye may combine the beams also from neighboring source components for the formation of correct retinal focus cues.

Irradiance distributions of voxel resolutions were simulated for two 1 mm x 1 mm detector surfaces. One detector surface was within a virtual focal surface located 426 mm from a viewer's eyes. The second detector surface was within a display surface located 500 mm from the viewer's eyes. These simulations were made with red 654 nm wavelength light, which represents one of the longest wavelengths in the visible light range. The results simulated the geometric imaging effects. Diffraction effects may blur the spots depending on the wavelength used and the blocking aperture sizes (which may be created with an LCD). The diffraction effects with blue beams may be somewhat smaller than with green beams, and the diffraction effects with red beams may be somewhat larger. For some embodiments, because example simulations used two apertures to generate a single source split beam, the diffraction effects may be reduced somewhat due to the interferometric effect if the two beam sections are combined to form a part of the voxel. Because an eye sees only one beam, this interference effect is most likely also visible on the eye retina.

A spot size obtained with a single source and one generated beam split into two crossing sections is around 200 µm at the intermediate 426 mm focal surface. This spot size was obtained with LCD pixel mask apertures that were 81 µm x 27 µm in size. On the display surface, the spot was around 60 µm when the central LCD aperture mask was used for an aperture size of approximately 54 µm x 54 µm. The simulation results indicate that, for some embodiments, the maximum achievable voxel resolution at the front of the 3D image zone is approximately VGA quality, whereas the resolution on the display surface approximates Full HD.

To test focal cues, a single split beam was simulated with an eye model and spots were obtained for the retinal images. Different combinations of voxel distances and eye focus distances were simulated. Voxels were rendered with a single split beam for distances of 426 mm (in front of the display), 500 mm (on the display surface), and 607 mm (behind the display). Eye focus distances were rendered for the same distances as the voxels. When the eye is focused to the distance of 500 mm, for example, the voxels rendered for 426 mm and 607 mm distances appear as spot pairs. This effect is caused by the single source beam of the periodic layer splitting into two beam sections that cross each other at the designated focus distance and that appear as separate beam sections at all other distances. This separation is used to induce the correct response in the human visual system to try to overlay the two spots by re-focusing the eye lens. When the spot crossing is at the same location as the voxel formed to the two eyes with two separate beams, both the retinal focus cues and eye convergence angles give the same signal to the human visual system, and there is no VAC.

If the eye is focused to the closest distance of 426 mm, the voxel rendered at 500 mm distance appears as one spot, but the voxel rendered to 607 mm distance appears as separated spots. If the eye is focused to the furthest distance of 607 mm, the intermediate voxel rendered at 500 mm distance is in focus, whereas the closest voxel at 426 mm appears as two separate spots. This effect means that the voxel depth range may be made to look continuous to the eye because single beams have a long range of focus and two beam crossings may be used to form full voxels to the two eyes without contradicting retinal focus cues. This feature also allows the use of larger apertures in the LCD layer because two single beam section pairs may be used for forming one eye voxel beam. For some embodiments, this configuration may improve the image brightness because a larger portion of the emitted light may be used for the voxel formation. This configuration also enables better utilization of the large system numerical aperture created with a lens cluster approach. Overall, the simulations show that, for some embodiments, a collimating lens cluster may be combined with a periodic layer to create a 3D image zone that has relatively good resolution and brightness.

### Further Embodiments

An example apparatus in accordance with some embodiments may include: a light-emitting layer comprising a plurality of pixels; an optical layer overlaying the light-emitting layer, the optical layer comprising a plurality of mosaic cells, each mosaic cell comprising at least (i) a first set of optical tiles, each optical tile in the first set having a first optical power, and (ii) a second set of optical tiles, each optical tile in the second set having a second optical power; and a spatial light modulator operative to provide control over which optical tiles transmit light from the light-emitting layer outside the display device.

For some embodiments of the example apparatus, the second optical power may be different from the first optical power

For some embodiments of the example apparatus, each mosaic cell further may include a third set of optical tiles, each optical tile in the third set having a third optical power, the third optical power being different from the first optical power and the second optical power.

For some embodiments of the example apparatus, the optical power of one of the sets may be zero.

For some embodiments of the example apparatus, the mosaic cells may be arranged in a two-dimensional tessellation.

For some embodiments of the example apparatus, the mosaic cells may be arranged in a square grid.

For some embodiments of the example apparatus, different optical tiles within the first set may have different tilt directions.

For some embodiments of the example apparatus, different optical tiles within the second set may have different tilt directions.

For some embodiments of the example apparatus, for at least one of the sets, different optical tiles within the respective set may have different tilt directions, and the tilt directions may be selected such that light beams that are emitted from at least one of the pixels and that pass through different optical tiles in the set converge at a focal plane associated with the respective set.

For some embodiments of the example apparatus, each mosaic cell further may include at least one translucent tile operative to scatter light from the light-emitting layer.

For some embodiments of the example apparatus, the optical layer may be positioned between the light-emitting layer and the spatial light modulator.

For some embodiments of the example apparatus, the spatial light modulator may be positioned between the light-emitting layer and the optical layer.

For some embodiments of the example apparatus, the spatial light modulator may include a liquid crystal display panel.

For some embodiments of the example apparatus, the light-emitting layer may include an array of light-emitting diode elements.

For some embodiments of the example apparatus, the mosaic cells may be identical to one another.

For some embodiments of the example apparatus, the mosaic cells may differ from one another only in geometric reflection or rotation.

For some embodiments of the example apparatus, the optical tiles having the first optical power may be operative to focus light from the light-emitting layer onto a first focal plane; and the optical tiles having the second optical power may be operative to focus light from the light-emitting layer onto a second focal plane.

For some embodiments of the example apparatus, the spatial light modulator may include a plurality of spatial light modulator pixels.

For some embodiments of the example apparatus, a whole number of spatial light modulator pixels overlays each of the optical tiles.

Another example apparatus in accordance with some embodiments may include: a light-emitting layer comprising a plurality of pixels; an optical layer overlaying the light-emitting layer, the optical layer comprising a plurality of mosaic cells, each mosaic cell comprising a plurality of optical tiles, each optical tile in a mosaic cell differing from any other optical tile in the mosaic cell in at least one of the following optical properties: (i) optical power, (ii) tilt, and (iii) translucency; and a spatial light modulator operative to provide control over which optical tiles transmit light from the light-emitting layer outside the display device.

An example method in accordance with some embodiments may include: emitting light from a plurality of light emitting elements; producing beams of light by focusing the emitted light using a periodic layer of optical features; and controlling, in a time synchronized manner, the beams of light using a spatial light modulator

A further example apparatus in accordance with some embodiments may include: a light emitting layer (LEL) comprising an array of light emitting elements; an optical layer comprising a plurality of tiles with optical properties; and a spatial light modulator (SLM); wherein the tiles focus light emitted from the light emitting elements into beams of light; wherein each beam of light is focused to a direction depending on the optical properties of the respective tile; and wherein the SLM controls the beams of light in a synchronized manner with the light emitting layer in order to replicate the properties of a light field.

For some embodiments of the further example apparatus, the optical layer may include a plurality of periodic features, the periodic features comprising a plurality of tiles arranged in a mosaic pattern.

For some embodiments of the further example apparatus, the mosaic pattern may include a plurality of sets of tiles, the tiles in each set being operative to focus beams of light to the same focal distance.

For some embodiments of the further example apparatus, the plurality of periodic features may be arranged in a grid.

For some embodiments of the further example apparatus, the plurality of periodic features may be arranged in columns and wherein neighboring columns are positioned with a vertical offset.

For some embodiments of the further example apparatus, the SLM may control the beams of light by selectively blocking or passing the beams of light.

For some embodiments of the further example apparatus, the SLM may include a plurality of apertures.

For some embodiments of the further example apparatus, beams of light may be crossed in order to form voxels.

For some embodiments of the further example apparatus, the SLM may be an LCD panel.

For some embodiments of the further example apparatus, the LEL may include a µLED matrix or an OLED display.

For some embodiments of the further example apparatus, the optical layer may include a sheet with graded index lens features

For some embodiments of the further example apparatus, the optical layer may include a holographic grating manufactured by exposing photoresist material to a laser-generated interference pattern

For some embodiments of the further example apparatus, the LEL may have a refresh rate faster than a refresh rate for the SLM.

Some embodiments of the further example apparatus may include an eye tracking module, wherein the eye tracking module may detect the position of at least one observer.

In some embodiments, a display device includes: a light-emitting layer comprising a plurality of pixels; a light-collimating layer overlaying the light-emitting layer, the light-collimating layer comprising an array of lenses; a periodic refocusing layer overlaying the light-collimating layer, the periodic refocusing layer comprising a plurality of periodic features, each periodic feature comprising at least (i) a first zone having a first optical power, and (ii) a second zone having a second optical power; and a spatial light modulator operative to provide control over which zones transmit light from the light-emitting layer outside the display device. The second optical power may be different from the first optical power. The optical power of one of the zones may be zero. The zone having the first optical power may be operative to focus light from the light-emitting layer onto a first focal plane, and the zone having the second optical power may be operative to focus light from the light-emitting layer onto a second focal plane.

In some embodiments, different zones have different tilt directions, and the tilt directions are selected such that light beams that are emitted from at least one of the pixels and that pass through different zones in the set converge at a focal plane.

In some embodiments, the spatial light modulator is positioned between the light-emitting layer and the light-collimating layer. In some embodiments, the spatial light modulator is positioned between the light-collimating layer and the periodic refocusing layer. In some embodiments, the periodic layer is positioned between the light-collimating layer and the spatial light modulator.

In some embodiments, a plurality of lenses from the array of lenses forms a lens cluster operative to focus and collimate light from one of the pixels into a plurality of beams associated with a single source. Beams associated with a single source may pass through different zones and may be focused to different focal planes. Beams associated with a single source may pass through different zones and may be focused to the same focal plane. Beams associated with a single source may pass through different zones and may be focused to the same voxel.

In some embodiments, the array of lenses comprises a lenticular sheet. In some embodiments, the array of lenses comprises a microlens array. In some embodiments, each lens in the array of lenses has a focal power along a single axis. In some embodiments, each lens in the array of lenses has a focal power along more than one axis.

In some embodiments, a display device includes: a light-emitting layer comprising a plurality of pixels; a light-collimating layer overlaying the light-emitting layer, the light-collimating layer operative to focus and collimate beams of light from individual pixels into a plurality of beam sections; a periodic refocusing layer overlaying the light-collimating layer, the periodic refocusing layer comprising a plurality of periodic features, each periodic feature comprising a plurality of optical zones, each optical zone in a periodic feature differing from any other optical zone in the periodic feature in at least one of the following optical properties: (i) optical power, (ii) tilt, and (iii) translucency; and a spatial light modulator operative to provide control over which optical zones transmit light from the light-emitting layer outside the display device.

In some embodiments, a method of producing images from a display device includes: collimating light emitted from a plurality of light emitting elements into one or more beams of light; forming a plurality of beam sections by focusing the one or more beams of light through an array of optical features, each optical feature comprising a plurality of zones, wherein each beam section has a focal distance based on the optical properties of the corresponding zone through which it is focused; and controlling which beam sections are transmitted outside the display device by selectively blocking beam sections using a spatial light modulator.

In some embodiments, a method of producing virtual pixels includes: emitting light from a plurality of light emitting elements; producing beams of light by collimating the emitted light using an array of lenses; focusing the beams of light into beam sections using an array of periodic features, each periodic feature comprising a plurality of zones, each zone differing from any other zone in the periodic feature in at least one of the following optical properties: (i) optical power, (ii) tilt, and (iii) translucency; and controlling the transmission of beams of light using a spatial light modulator.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A display device for displaying at least one voxel, the device comprising:
a light-emitting layer (2402) comprising an addressable array of light-emitting elements;
a mosaic optical layer (2406) overlaying the light-emitting layer, the mosaic optical layer comprising a plurality of mosaic cells arranged in a repeating mosaic cell pattern, each mosaic cell containing optical tiles and including at least a first optical tile having a first tilt direction and a second optical tile having a second tilt direction different from the first tilt direction;
a collimating layer (2404) between the light-emitting layer and the mosaic optical layer; and
a spatial light modulator (2408) configured to provide control over which of the optical tiles transmit light from the light-emitting layer outside the display device by selectively passing at least two light beam sections that cross at a voxel position to form a voxel to be displayed, while blocking other light beam sections.

2. The device of claim 1, wherein each mosaic cell further comprises at least one translucent optical tile operative to scatter light from the light-emitting layer.

3. The device of any of claims 1-2, wherein each mosaic cell comprises at least one optical tile having a first optical power and at least one optical tile having a second optical power different from the first optical power.

4. The device of any of claims 1-3, wherein each mosaic cell comprises at least two non-contiguous optical tiles having the same optical power.

5. The device of any of claims 1-4, wherein each mosaic cell comprises at least two optical tiles that have the same optical power but different tilt directions.

6. The device of any of claims 1-5, wherein, for at least one voxel position, at least one optical tile in a first mosaic cell is configured to direct light from a first light-emitting element in a first beam toward the voxel position, and at least one optical tile in a second mosaic cell is configured to direct light from a second light-emitting element in a second beam toward the voxel position.

7. The device of any of claims 1-5, wherein, for at least one voxel position, at least one optical tile in a first mosaic cell is configured to focus an image of a first light-emitting element onto the voxel position, and at least one optical tile in a second mosaic cell is configured to focus an image of a second light- emitting element onto the voxel position.

8. The device of any of claims 1-7, wherein the optical tiles in each mosaic cell are substantially square or rectangular.

9. The device of any of claims 1-8, wherein the mosaic cells are arranged in a two-dimensional tessellation.

10. The device of any of claims 1-9, wherein the mosaic optical layer is positioned between the light- emitting layer and the spatial light modulator.

11. The device of any of claims 1-10, further comprising a collimating layer between the light-emitting layer and the mosaic optical layer.

12. A method of displaying at least one voxel by a display device, the method comprising:
emitting light from at least one selected light-emitting element in a light-emitting layer (2402) comprising an addressable array of light-emitting elements, the emitted light being emitted toward a collimating layer;
collimating the light with the collimating layer (2404) and directing the collimated light toward a mosaic optical layer, the mosaic optical layer (2406) comprising a plurality of mosaic cells arranged in a repeating mosaic cell pattern, each mosaic cell containing optical tiles and including at least a first optical tile having a first tilt direction and a second optical tile having a second tilt direction different from the first tilt direction; and
operating a spatial light modulator (2408) to provide control over which of the optical tiles transmit light from the light-emitting layer outside the display device by selectively passing at least two light beam sections that cross at a voxel position to form a voxel to be displayed, while blocking other light beam sections.

13. The method of claim 12, wherein, for at least one voxel position, at least one optical tile in a first mosaic cell is selected to direct light from a first light-emitting element in a first beam toward the voxel position, and at least one optical tile in a second mosaic cell is configured to direct light from a second light-emitting element in a second beam toward the voxel position, such that the first beam and the second beam cross at the voxel position.

## Patentansprüche

1. Anzeigevorrichtung zum Anzeigen mindestens eines Voxels, wobei die Vorrichtung Folgendes umfasst:
eine lichtemittierende Schicht (2402), die ein adressierbares Array von lichtemittierenden Elementen umfasst;
eine optische Mosaikschicht (2406), die über der lichtemittierenden Schicht liegt, wobei die optische Mosaikschicht mehrere Mosaikzellen umfasst, die in einem sich wiederholenden Mosaikzellenmuster angeordnet sind, wobei jede Mosaikzelle optische Kacheln enthält und mindestens eine erste optische Kachel mit einer ersten Neigungsrichtung und eine zweite optische Kachel mit einer zweiten Neigungsrichtung, die sich von der ersten Neigungsrichtung unterscheidet, beinhaltet;
eine Kollimationsschicht (2404) zwischen der lichtemittierenden Schicht und der optischen Mosaikschicht; und
einen räumlichen Lichtmodulator (2408), der dazu ausgelegt ist, eine Steuerung dafür bereitzustellen, welche der optischen Kacheln Licht von der lichtemittierenden Schicht außerhalb der Anzeigevorrichtung transmittieren, indem mindestens zwei Lichtstrahlabschnitte, die sich an einer Voxelposition kreuzen, selektiv durchgelassen werden, um ein anzuzeigendes Voxel zu bilden, während andere Lichtstrahlabschnitte blockiert werden.

2. Vorrichtung nach Anspruch 1, wobei jede Mosaikzelle ferner mindestens eine lichtdurchlässige optische Kachel umfasst, die dazu funktionsfähig ist, Licht von der lichtemittierenden Schicht zu streuen.

3. Vorrichtung nach einem der Ansprüche 1-2, wobei jede Mosaikzelle mindestens eine optische Kachel mit einer ersten Brechkraft und mindestens eine optische Kachel mit einer von der ersten Brechkraft verschiedenen zweiten Brechkraft umfasst.

4. Vorrichtung nach einem der Ansprüche 1-3, wobei jede Mosaikzelle mindestens zwei nicht benachbarte optische Kacheln mit der gleichen Brechkraft umfasst.

5. Vorrichtung nach einem der Ansprüche 1-4, wobei jede Mosaikzelle mindestens zwei optische Kacheln umfasst, die die gleiche Brechkraft, aber unterschiedliche Neigungsrichtungen aufweisen.

6. Vorrichtung nach einem der Ansprüche 1-5, wobei für mindestens eine Voxelposition mindestens eine optische Kachel in einer ersten Mosaikzelle dazu ausgelegt ist, Licht von einem ersten lichtemittierenden Element in einem ersten Strahl zu der Voxelposition hin zu lenken, und mindestens eine optische Kachel in einer zweiten Mosaikzelle dazu ausgelegt ist, Licht von einem zweiten lichtemittierenden Element in einem zweiten Strahl zu der Voxelposition hin zu lenken.

7. Vorrichtung nach einem der Ansprüche 1-5, wobei für mindestens eine Voxelposition mindestens eine optische Kachel in einer ersten Mosaikzelle dazu ausgelegt ist, ein Bild eines ersten lichtemittierenden Elements auf die Voxelposition zu fokussieren, und mindestens eine optische Kachel in einer zweiten Mosaikzelle dazu ausgelegt ist, ein Bild eines zweiten lichtemittierenden Elements auf die Voxelposition zu fokussieren.

8. Vorrichtung nach einem der Ansprüche 1-7, wobei die optischen Kacheln in jeder Mosaikzelle im Wesentlichen quadratisch oder rechteckig sind.

9. Vorrichtung nach einem der Ansprüche 1-8, wobei die Mosaikzellen in einer zweidimensionalen Parkettierung angeordnet sind.

10. Vorrichtung nach einem der Ansprüche 1-9, wobei die optische Mosaikschicht zwischen der lichtemittierenden Schicht und dem räumlichen Lichtmodulator positioniert ist.

11. Vorrichtung nach einem der Ansprüche 1-10, die ferner eine Kollimationsschicht zwischen der lichtemittierenden Schicht und der optischen Mosaikschicht umfasst.

12. Verfahren zum Anzeigen mindestens eines Voxels durch eine Anzeigevorrichtung, wobei das Verfahren Folgendes umfasst:
Emittieren von Licht von mindestens einem ausgewählten lichtemittierenden Element in einer lichtemittierenden Schicht (2402), die ein adressierbares Array von lichtemittierenden Elementen umfasst, wobei das emittierte Licht zu einer Kollimationsschicht hin emittiert wird;
Kollimieren des Lichts mit der Kollimationsschicht (2404) und Lenken des kollimierten Lichts zu einer optischen Mosaikschicht hin, wobei die optische Mosaikschicht (2406) mehrere Mosaikzellen umfasst, die in einem sich wiederholenden Mosaikzellenmuster angeordnet sind, wobei jede Mosaikzelle optische Kacheln enthält und mindestens eine erste optische Kachel mit einer ersten Neigungsrichtung und eine zweite optische Kachel mit einer zweiten Neigungsrichtung, die sich von der ersten Neigungsrichtung unterscheidet, beinhaltet; und
Betreiben eines räumlichen Lichtmodulators (2408) dahingehend, eine Steuerung davon bereitzustellen, welche der optischen Kacheln Licht von der lichtemittierenden Schicht außerhalb der Anzeigevorrichtung transmittieren, indem mindestens zwei Lichtstrahlabschnitte, die sich an einer Voxelposition kreuzen, selektiv durchgelassen werden, um ein anzuzeigendes Voxel zu bilden, während andere Lichtstrahlabschnitte blockiert werden.

13. Verfahren nach Anspruch 12, wobei für mindestens eine Voxelposition mindestens eine optische Kachel in einer ersten Mosaikzelle ausgewählt wird, um Licht von einem ersten lichtemittierenden Element in einem ersten Strahl zu der Voxelposition hin zu lenken, und mindestens eine optische Kachel in einer zweiten Mosaikzelle dazu ausgelegt ist, Licht von einem zweiten lichtemittierenden Element in einem zweiten Strahl zu der Voxelposition hin zu lenken, so dass sich der erste Strahl und der zweite Strahl an der Voxelposition kreuzen.

## Revendications

1. Dispositif d'affichage destiné à afficher au moins un voxel, le dispositif comprenant :
une couche émettrice de lumière (2402) comprenant un réseau adressable d'éléments émetteurs de lumière ;
une couche optique en mosaïque (2406) recouvrant la couche émettrice de lumière, la couche optique en mosaïque comprenant une pluralité de cellules de mosaïque agencées selon un motif répétitif de cellules de mosaïque, chaque cellule de mosaïque contenant des dalles optiques et comportant au moins une première dalle optique ayant une première direction d'inclinaison et une deuxième dalle optique ayant une deuxième direction d'inclinaison différente de la première direction d'inclinaison ;
une couche de collimation (2404) entre la couche émettrice de lumière et la couche optique en mosaïque ; et
un modulateur spatial de lumière (2408) conçu pour assurer un contrôle sur les dalles optiques qui transmettent la lumière issue de la couche émettrice de lumière à l'extérieur du dispositif d'affichage en laissant passer sélectivement au moins deux sections de faisceau lumineux qui se croisent à une position de voxel pour former un voxel à afficher, tout en bloquant d'autres sections de faisceau lumineux.

2. Dispositif selon la revendication 1, dans lequel chaque cellule de mosaïque comprend en outre au moins une dalle optique translucide opérante pour diffuser la lumière issue de la couche émettrice de lumière.

3. Dispositif selon l'une quelconque des revendications 1 et 2, dans lequel chaque cellule de mosaïque comprend au moins une dalle optique ayant une première puissance optique et au moins une dalle optique ayant une deuxième puissance optique différente de la première puissance optique.

4. Dispositif selon l'une quelconque des revendications 1 à 3, dans lequel chaque cellule de mosaïque comprend au moins deux dalles optiques non contiguës ayant la même puissance optique.

5. Dispositif selon l'une quelconque des revendications 1 à 4, dans lequel chaque cellule de mosaïque comprend au moins deux dalles optiques qui ont la même puissance optique, mais des directions d'inclinaison différentes.

6. Dispositif selon l'une quelconque des revendications 1 à 5 dans lequel, pour au moins une position de voxel, au moins une dalle optique dans une première cellule de mosaïque est conçue pour acheminer la lumière issue d'un premier élément émetteur de lumière dans un premier faisceau vers la position de voxel, et au moins une dalle optique dans une deuxième cellule de mosaïque est conçue pour acheminer la lumière issue d'un deuxième élément émetteur de lumière dans un deuxième faisceau vers la position de voxel.

7. Dispositif selon l'une quelconque des revendications 1 à 5 dans lequel, pour au moins une position de voxel, au moins une dalle optique dans une première cellule de mosaïque est conçue pour focaliser une image d'un premier élément émetteur de lumière sur la position de voxel, et au moins une dalle optique dans une deuxième cellule de mosaïque est conçue pour focaliser une image d'un deuxième élément émetteur de lumière sur la position de voxel.

8. Dispositif selon l'une quelconque des revendications 1 à 7, dans lequel les dalles optiques dans chaque cellule de mosaïque sont sensiblement carrées ou rectangulaires.

9. Dispositif selon l'une quelconque des revendications 1 à 8, dans lequel les cellules de mosaïque sont agencées en un pavage bidimensionnel.

10. Dispositif selon l'une quelconque des revendications 1 à 9, dans lequel la couche optique en mosaïque est positionnée entre la couche émettrice de lumière et le modulateur spatial de lumière.

11. Dispositif selon l'une quelconque des revendications 1 à 10, comprenant en outre une couche de collimation entre la couche émettrice de lumière et la couche optique en mosaïque.

12. Procédé d'affichage d'au moins un voxel par un dispositif d'affichage, le procédé comprenant :
l'émission de lumière depuis au moins un élément émetteur de lumière sélectionné dans une couche émettrice de lumière (2402) comprenant un réseau adressable d'éléments émetteurs de lumière, la lumière émise étant émise vers une couche de collimation ;
la collimation de la lumière avec la couche de collimation (2404) et l'acheminement de la lumière collimatée vers une couche optique en mosaïque, la couche optique en mosaïque (2406) comprenant une pluralité de cellules de mosaïque agencées selon un motif répétitif de cellules de mosaïque, chaque cellule de mosaïque contenant des dalles optiques et comportant au moins une première dalle optique ayant une première direction d'inclinaison et une deuxième dalle optique ayant une deuxième direction d'inclinaison différente de la première direction d'inclinaison ; et
le fonctionnement d'un modulateur spatial de lumière (2408) pour assurer un contrôle sur les dalles optiques qui transmettent la lumière issue de la couche émettrice de lumière à l'extérieur du dispositif d'affichage en laissant passer sélectivement au moins deux sections de faisceau lumineux qui se croisent à une position de voxel pour former un voxel à afficher, tout en bloquant d'autres sections de faisceau lumineux.

13. Procédé selon la revendication 12 dans lequel, pour au moins une position de voxel, au moins une dalle optique dans une première cellule de mosaïque est sélectionnée pour acheminer la lumière issue d'un premier élément émetteur de lumière dans un premier faisceau vers la position de voxel, et au moins une dalle optique dans une deuxième cellule de mosaïque est conçue pour acheminer la lumière issue d'un deuxième élément émetteur de lumière dans un deuxième faisceau vers la position de voxel, de sorte que le premier faisceau et le deuxième faisceau se croisent à la position de voxel.
